# EUROPEAN PATENT APPLICATION

(11) **EP 4 386 617 A1**
(43) Date of publication of application: **19.06.2024**
(21) Application number: 22855889.6
(22) Date of filing: 09.08.2022
(51) Int. Cl.: G06K 7/10

(54) **INFORMATION READING DEVICE**

(30) Priority: 10.08.2021 JP 2021130599
(71) Applicant: DENSO WAVE INCORPORATED, Agui-cho Chita-gun, Aichi 470-2297 (JP)
(72) Inventor: ARAKI, Ryosuke, Chita-gun, Aichi 470-2297 (JP); MARUYAMA, Kentarou, Chita-gun, Aichi 470-2297 (JP); ITO, Akira, Chita-gun, Aichi 470-2297 (JP); TSUBOTA, Keita, Chita-gun, Aichi 470-2297 (JP)
(74) Representative: Kuhnen & Wacker Patent- und Rechtsanwaltsbüro PartG mbB
(86) International application number: PCT/JP2022/030478
(87) International publication number: WO 2023/017827

(57) **Abstract**

An information reading apparatus according to an aspect of the present disclosure includes a box which suppresses outside leakage of radio waves, a housing unit housing a plurality of articles, at least one reading antenna for reading information from a radio tag shaped like a plate and attached to each of the plurality of articles, and a control unit performing reading processing of reading information from the radio tag in the housing unit utilizing the at least one reading antennas. (a) The housing unit houses the plurality of articles in such a manner that a plate surface of the radio tag attached to each of the plurality of articles is orthogonal to an opposing direction of a pair of opposing inner surfaces among a plurality of inner surfaces of the housing unit, and (b) a first distance between either one of the pair of inner surfaces and an inner surface of the box opposed by an outer surface of the housing unit corresponding to the either one of the pair of inner surface is longer than a second distance between other inner surfaces among to the plurality of inner surfaces of the housing unit other than the pair of inner surfaces and inner surfaces of the box opposed by outer surfaces of the housing unit corresponding to the other inner surfaces.

## Description

### Technical Field

The present disclosure relates to an information reading apparatus that reads information from a radio tag attached to an article in a box.

### Background Art

To acquire information related to an article housed in a housing space such as a housing box, many technologies have been adopted in which a radio tag with recorded information related to the article is attached to the article and in which the information is read from the radio tag via an antenna disposed in the housing box. As a technology for reading the information from the radio tag of the housed article, for example, a housing box disclosed in PTL1 listed below is known. The whole housing box is formed of a metal material in order to block radio waves. A radio wave transmitter for an IC (Integrated Circuit) tag and a receiving antenna are disposed inside the box. Thus, the information of the IC tag is read, the IC tag being attached to the article housed inside the housing box. However, no information of an IC tag outside the housing box is read.

### Citation List

### Patent Literature

PTL 1: JP 2012-216925 A

### Summary of the Invention

In a case where a box which suppresses outside leakage of radio waves houses an article with a radio tag, information may fail to be read from the radio tag depending on a housing situation and the like. For example, in a case where the radio tag is located parallel and in proximity to an inner surface of the box, a floating capacitance coupled between a tag surface of the radio tag and the inner surface of the box increases, leading to an impedance mismatch. This may prevent information from being read from the radio tag. Accordingly, the tag surface of the radio tag is desirably located away from the inner surface of the box. However, an excessive distance between the tag surface and the inner surface reduces the number of articles that can be housed in the box.

The present disclosure has been made in order to solve the problems described above, and an object of the present disclosure is to provide an information reading apparatus that can increase a read rate for information of a radio tag in a box while securing the number of articles that can be housed.

An information reading apparatus according to an aspect of the present disclosure includes a box which suppresses outside leakage of radio waves, a housing unit disposed in the box and housing a plurality of articles in a predetermined arrangement, at least one reading antenna disposed in the box for reading information from a radio tag shaped like a plate and attached to each of the plurality of articles at a predetermined position, and a control unit performing reading processing of reading information from the radio tag in the housing unit utilizing the at least one reading antenna, wherein (a) the housing unit houses the plurality of articles in such a manner that a plate surface of the radio tag attached to each of the plurality of articles is orthogonal to an opposing direction of a pair of opposing inner surfaces among a plurality of inner surfaces of the housing unit, and (b) a first distance between either one of the pair of inner surfaces and an inner surface of the box opposed by an outer surface of the housing unit corresponding to the either one of the pair of inner surface is longer than a second distance between other inner surfaces among the plurality of inner surfaces of the housing unit other than the pair of inner surfaces and inner surfaces of the box opposed by outer surfaces of the housing unit corresponding to the other inner surfaces.

The plate-like radio tag is susceptible to an electromagnetic shield in a direction orthogonal to the plate surface, and thus in a case where a distance from the radio tag to the electromagnetic shield is short, reading from the radio tag may fail.

According to an embodiment of the present disclosure described above, a distance from each radio tag closest to one of the pair of inner surfaces to the box in a direction orthogonal to the plate surface of the radio tag is longer than in a case where each first distance is the same as or shorter than each second distance. Accordingly, compared to this case, it is possible to suppress the influence of the box on each radio tag. Additionally, the second distance is shorter than the first distance. Accordingly, compared to a case where the second distance is the same as or longer than the first distance, the housing unit is larger, allowing for an increase in the number of articles that can be housed. Therefore, the read rate for the information of the radio tag inside the box can be increased, while the number of articles that can be housed can be secured.

Additionally, the information reading apparatus may include an antenna for external communication, the antenna being disposed inside the box and used to communicate wirelessly with external equipment outside the box, and the box may be provided with a hole portion with an opening width of λ2/4 or more and less than λ1/4, where λ1 is a wavelength of a radio wave from the at least one reading antenna, and λ2 is a wavelength of a radio wave from the antenna for external communication.

Thus, radio waves output from the antenna for external communication are output to the outside through the hole portion, whereas radio waves output from the reading antenna cannot pass through the hole portion Accordingly, even when the antenna for external communication is disposed in the box, the antenna for external communication can communicate wirelessly with the external equipment, while suppressing reading of information from the radio tag outside the box.

Additionally, the at least one reading antenna may include a plurality of reading antennas, the plurality of antennas may respectively operate as at least one of an antenna transmitting a signal to the radio tag and an antenna receiving a signal from the radio tag, the control unit may perform the reading processing for each transmission and reception pattern that is a selection pattern for the reading antenna used for transmission and reception, and the transmission and reception pattern may include a pattern in which the same reading antenna is used for transmission and reception, and a pattern in which different reading antennas are used for transmission and reception.

In a case where one of the plurality of reading antennas disposed in the box is used to perform the reading processing, the information of the radio tag that cannot have been read utilizing a certain reading antenna may be read utilizing another reading antenna. This is because the different reading antennas have different null ranges (that is, the area where communication with radio tags is disabled). Accordingly, the number of selection patterns (that is, transmission and reception patterns) for antennas with different null ranges increases consistently with the number of reading antennas, thus allowing for an increase in the read rate for the information of the radio tag. However, an increased number of reading antennas consistently increases the number of spaces for installation of the reading antennas, inhibiting miniaturization of the box.

However, according to an embodiment of the present disclosure described above, for example, in a case where two reading antennas are disposed, two antenna selection patterns are involved in the first type pattern in which the same antenna is used for transmission and reception, and two antenna selection patterns are involved in the second type pattern in which different antennas are used for transmission and reception. That is, the two reading antennas involve four antenna selection patterns (that is, transmission and reception patterns). In this manner, the number of transmission and reception patterns with different null ranges can be increased to a value that is greater than or equal to the number of reading antennas. Therefore, the read rate for the information of the radio tag can be increased without inhibiting miniaturization of the box.

Additionally, according to a result of a comparison between a predetermined threshold corresponding to transmit power for a signal transmitted via the at least one reading antenna and a received signal strength of a signal received from a radio tag, the control unit determines whether the radio tag that is a source of the received signal is housed in the box. The transmit power and the predetermined threshold may be set according to the number of radio tags previously determined to be housed in the box.

When the plurality of radio tags housed in the box is densely disposed, the signal (that is, response wave) received from each radio tag tends to have a reduced received signal strength. On the other hand, a reduced number of radio tags housed in the box increases the received signal strength of the response wave from the radio tag outside the box. Accordingly, when the threshold is reduced that is used to determine whether the radio tag is housed in the box based on a received signal strength, the radio tag outside the box may be erroneously determined to be housed in the box in a case where the number of radio tags decreases. Additionally, the transmit power of the reading antenna is increased to read information from the radio tags densely housed in the box. On the other hand, an increase in the transmit power increases the received signal strength of the response wave from the radio tag outside the box. Accordingly, when the transmit power increases, the radio tag outside the box may be erroneously determined to be housed in the box in a case where the number of radio tags decreases.

However, according to an embodiment of the present disclosure described above, for example, by setting the transmit power and the predetermined threshold according to the number of radio tags previously correctly determined to be housed in the box, erroneous determination for the radio tag outside the box can be suppressed, the erroneous determination being caused by a variation in the number of radio tags housed. This allows an increase in the accuracy of reading of information from the radio tag.

Additionally, the at least one reading antenna may include a plurality of reading antennas, and the transmit power and the predetermined threshold may be set for each of the plurality of the reading antennas according to the number of radio tags previously determined to be housed in the box. Thus, even when the influence, on the determination, of the number of radio tags housed varies with reading antenna, the accuracy of reading of information from the radio tag can further be increased by setting each of the transmit power and predetermined threshold suitable for each reading antenna according to the number of radio tags.

Additionally, the information reading apparatus may include at least one outside-box antenna disposed outside the box to communicate wirelessly with a radio tag, the at least one reading antenna may include at least one inside-box antenna, and the control unit may perform reading processing of reading information from a radio tag utilizing the at least one inside-box antenna and the at least one outside-box antenna, and determine whether the radio tag that is a source of the received signal is housed in the box based on a received signal strength of a signal received by the at least one inside-box antenna from a radio tag and a received signal strength of a signal received by the at least one outside-box antenna from a radio tag.

In this manner, by using not only the inside-box antenna but also the outside-box antenna, whether the radio tag is housed in the box can be identified. This allows, without improving the shielding property of the box, suppression of leakage of the information of the radio tag outside the box into the information of the radio tag inside the box due to radio waves leaking from the box. That is, with an increase in costs suppressed, the information of the radio tag outside the box can be restrained from leaking into the information of the radio tag inside the box.

Additionally, the control unit may determine whether the radio tag that is a source of the received signal is housed in the box based on a magnitude relationship between the received signal strength of the signal received by the at least one inside-box antenna from a radio tag and the received signal strength of the signal received by the at least one outside-box antenna from a radio tag.

For the received signal strength of the signal from the radio tag outside the box, the one of the signal received by the outside-box antenna is higher than the one of the signal received by the inside-box antenna. Accordingly, by comparing the magnitude of the received signal strength between the inside-box antenna and the outside-box antenna, whether the radio tag is housed in the box can be determined.

Additionally, the information reading apparatus may include a control board including the control unit and the at least one outside-box antenna, and the control board may be installed outside the box.

In this manner, the outside-box antenna is incorporated into the control board. This allows for a reduction in installation cost of the outside-box antenna compared to a case where the outside-box antenna is independently installed.

Additionally, the at least one inside-box antenna may operate as an antenna transmitting a signal to a radio tag and as an antenna receiving a signal from a radio tag, the at least one outside-box antenna may operate as an antenna receiving a signal from a radio tag, and the control unit may determine whether the radio tag that is a source of the received signal is housed in the box based on a magnitude of a difference between the received signal strength of the signal received by the at least one inside-box antenna from a radio tag and the received signal strength of the signal received by the at least one outside-box antenna from a radio tag.

The difference between the received signal strength in a case where the inside-box antenna receives the signal from the radio tag inside the box and the received signal strength in a case where the outside-box antenna receives the signal from the radio tag inside the box is greater than the difference between the received signal strength in a case where the inside-box antenna receives the signal from the radio tag outside the box and the received signal strength in a case where the outside-box antenna receives the signal from the radio tag outside the box. Therefore, whether the radio tag is housed in the box can be determined based on the magnitude of the difference in received signal strength between the inside-box antenna and the outside-box antenna.

Additionally, the information reading apparatus may include a control board including the control unit, a reception unit receiving a signal from the at least one inside-box antenna, and a switch switching on and off a connection between the at least one inside-box antenna and the reception unit, wherein the control board may be installed outside the box, the at least one outside-box antenna may be wiring connecting the reception unit and the switch, and the control unit may determine whether the radio tag that is a source of the received signal is housed in the box based on the magnitude of the difference between the received signal strength of the signal received by the at least one inside-box antenna from a radio tag in a case where the switch is on and the received signal strength of the signal received by the at least one outside-box antenna from a radio tag in a case where the switch is off.

In this manner, by operating the wiring of the control board as an outside-box antenna, the outside-box antenna can be implemented without addition of an antenna. That is, with no increase in costs, the information of the radio tag outside the box can be restrained from leaking into the information of the radio tag inside the box.

Additionally, the control board may be installed on an upper surface of the box in a placed state.

Thus, the control board is installed near a location where the radio tag outside the box is likely placed, allowing the wiring of the control board to likely receive the signal from the radio tag outside the box.

### Brief Description of the Drawings

FIG. 1 is a perspective view illustrating an information reading apparatus according to a first embodiment.
FIG. 2 is a front view of the information reading apparatus in FIG. 1.
FIG. 3 is a plan view of the information reading apparatus in FIG. 1.
FIG. 4 is a cross-sectional view illustrating a cross section of the information reading apparatus taken across the line X1-X1 in FIG. 3.
FIG. 5 is a cross-sectional view illustrating a housing unit in which articles are housed and the neighborhood of the housing unit.
FIG. 6 is a perspective view of the information reading apparatus with a first case withdrawn.
FIG. 7 is a cross-sectional view illustrating a cross section corresponding to an X1-X1 cross section of the information reading apparatus with the first case omitted.
FIG. 8A is a cross-sectional view illustrating an information reading apparatus according to a second embodiment.
FIG. 8B is an enlarged cross-sectional view illustrating the neighborhood of a hole portion in FIG. 8A.
FIG. 9 is a block diagram schematically illustrating an electrical configuration of an information reading apparatus according to a third embodiment.
FIG. 10A is an explanatory diagram illustrating an example of a signal transmission and reception path in a first transmission and reception pattern.
FIG. 10B is an explanatory diagram illustrating another example of a signal transmission and reception path in a second transmission and reception pattern.
FIG. 11A is an explanatory diagram illustrating an example of a signal transmission and reception path in a third transmission and reception pattern.
FIG. 11B is an explanatory diagram illustrating another example of a signal transmission and reception path in a fourth transmission and reception pattern.
FIG. 12 is a graph illustrating a relationship between the number of radio tags housed in a box and a received signal strength of a radio tag outside a housing.
FIG. 13 is a graph illustrating a relationship between transmit power and the number of radio tags housed in the box and the received signal strength of a radio tag outside a housing.
FIG. 14 is a flowchart illustrating a flow of reading processing performed in a control unit according to a fourth embodiment.
FIG. 15 is an explanatory diagram illustrating the relationship between the number of radio tags housed and the transmit power and housing determination threshold set according to the number of radio tags housed.
FIG. 16 is a flowchart illustrating a flow of reading processing performed in the control unit in a first modification example of the fourth embodiment or the like.
FIG. 17 is a cross-sectional view illustrating a cross section in FIG. 3 of the information reading apparatus taken across the line X1-X1 according to a fifth embodiment.
FIG. 18 is a perspective view illustrating the information reading apparatus according to the fifth embodiment.
FIG. 19 is a block diagram schematically illustrating an electrical configuration of an information reading apparatus according to a first example of the fifth embodiment.
FIG. 20 is a diagram illustrating an example of the received signal strength of an inside-box antenna and an outside-box antenna according to the first example of the fifth embodiment.
FIG. 21 is a flowchart illustrating processing in the first example of the fifth embodiment.
FIG. 22 is a block diagram schematically illustrating an electrical configuration of an information reading apparatus according to a modification example of the first example of the fifth embodiment.
FIG. 23 is a block diagram schematically illustrating an electrical configuration of an information reading apparatus according to a second example of the fifth embodiment.
FIG. 24 is a diagram illustrating an example of the received signal strength when a fourth switch is in an ON state and in an OFF state according to the first example of the fifth embodiment.
FIG. 25 is a flowchart illustrating processing in a second example of the fifth embodiment.

### Description of Embodiments

### <First Embodiment>

A first embodiment in which an information reading apparatus is embodied according to the present disclosure will be described below with reference to the drawings.

An information reading apparatus 1 according to the present embodiment is an apparatus that reads information related to a plurality of articles G from a radio tag (for example, an RFID (Radio Frequency) tag) T attached to each of the articles G and shaped like a plate, the articles G being housed in a housing unit provided in a housing 2, that is, in a housing space S. Article information related to the article G is readably recorded in the radio tag T attached to each article G. Accordingly, by reading the plurality of radio tags T in the housing space S, the information can be acquired that is related to the plurality of articles G housed in the housing space S.

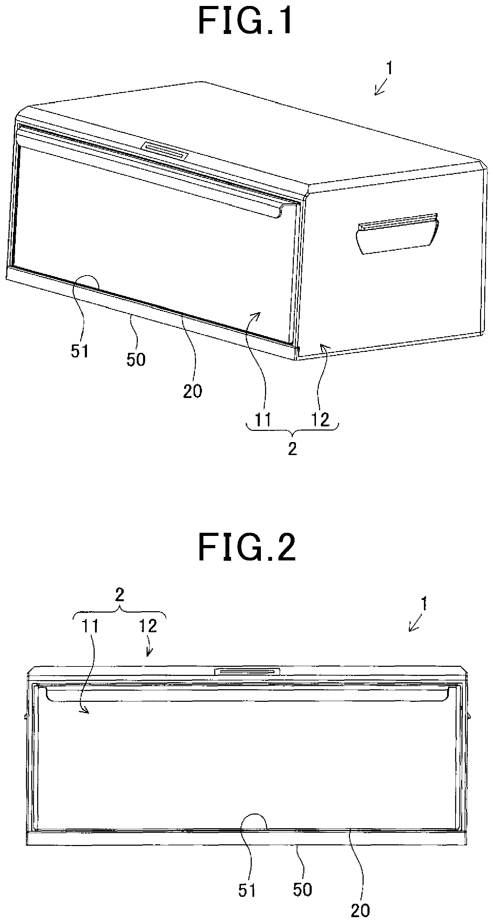

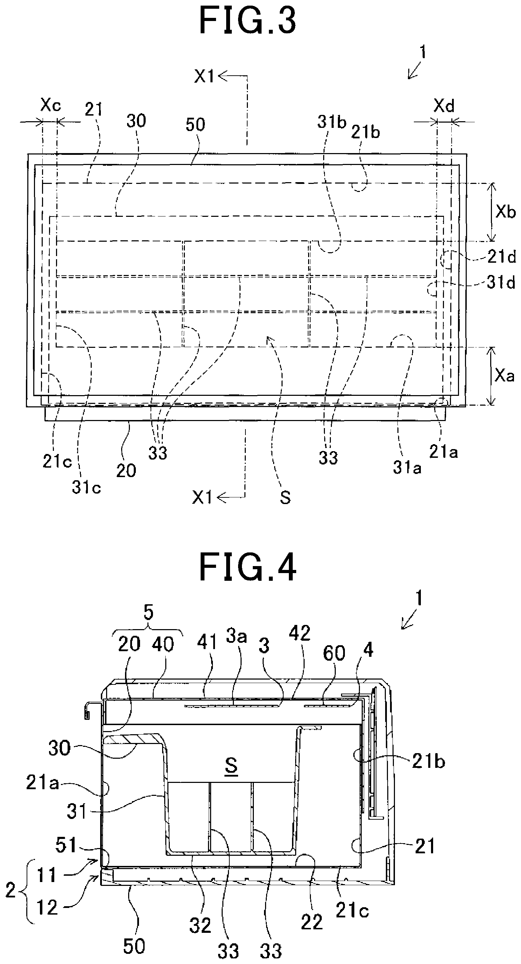

As illustrated in FIGS. 1 to 4, the information reading apparatus 1 includes a housing 2 including an inner case (hereinafter also referred to as a first case 11) and an outer case (hereinafter also referred to as a second case 12), and a plurality of antenna boards 3 and a control board 4 disposed in the housing 2. The housing 2 is slidably opened and closed. Specifically, the first case 11 slides in a predetermined slide direction (leftward direction in FIG. 4) with respect to the second case 12. By assembling the first case 11 and the second case 12 as described above, the articles G can be moved into and out of the housing 2. Note that in FIG. 3, illustration of the antenna board 3 and the control board 4 is omitted for convenience.

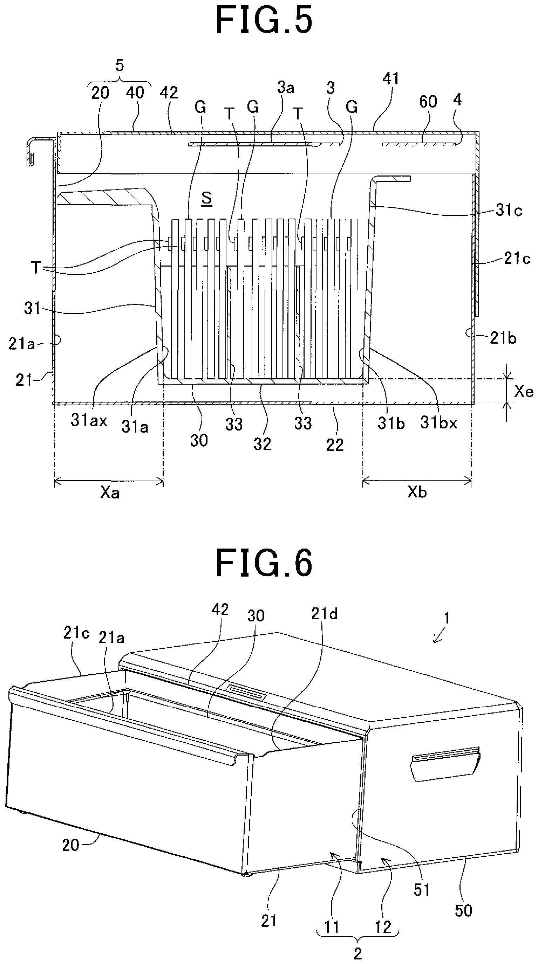

In the present embodiment, for example, the article G housed in the housing space S is a package having a small width and in which a predetermined chemical is encapsulated. As illustrated in FIG. 5, the radio tag T is attached to a predetermined position on a surface orthogonal to the thickness direction (lateral direction in FIG. 5) of the package. More specifically, the radio tag T formed like a plate is attached to the predetermined position with a plate surface of the radio tag T orthogonal to the thickness direction.

The first case 11 includes a first case body 20 and a housing unit 30 assembled inside the first case body 20. The second case 12 includes a second case body 40 and a cover portion 50 assembled outside the second case body 40.

The first case 11 is pushed into the second case 12 in such a manner that a closed space is formed by the first case body 20 and the second case body 40. The first case body 20 and the second case body 40 include a material that blocks radio waves or attenuates the radio wave intensity (for example, aluminum), and functions as a box 5 which suppresses leakage of the radio wave from the closed space to the outside. The housing unit 30 houses a plurality of the articles G, and is disposed in the box 5. Accordingly, the housing space S housing the plurality of articles G is formed in the closed space which suppresses leakage of radio waves.

As illustrated in FIGS. 3 and 4, the first case body 20 includes an annular peripheral wall 21 and a bottom 22 connected to a lower end side of the peripheral wall 21. Nothing is provided in a portion opposite to the bottom 22 (that is, a ceiling), and thus the first case body 20 is open in such a manner that each article G is taken in and out through the opening. The peripheral wall 21 includes a pair of inner surfaces 21a, 21b opposed in the slide direction and a pair of inner surfaces 21c, 21d opposed in a direction orthogonal to the slide direction. The peripheral wall 21 shaped like a quadrangular ring forms a square opening.

The housing unit 30 includes an annular peripheral wall 31 and a bottom 32 connected to a lower end side of the peripheral wall 31. Nothing is provided in a portion opposite to the bottom 32 (that is, a ceiling), and thus the housing unit 30 is open. The housing unit 30 houses the articles G in a predetermined arrangement in the housing space S. The predetermined arrangement is an arrangement in which the thickness direction of the articles G aligns with the slide direction described above. The peripheral wall 31 includes a pair of inner surfaces 31a, 31b opposed in the slide direction and a pair of inner surfaces 31c, 31d opposed in a direction orthogonal to the slide direction. The housing space S is formed by the pair of inner surfaces 31a, 31b, the pair of inner surfaces 31c, 31d, and an inner surface (bottom surface) of the bottom 32.

A plurality of partition walls 33 is provided on the inner surface of the bottom 32 in such a manner as to sit side by side along the slide direction. The predetermined number of articles G are interposed between the partition plates 33, and thus the articles G are housed in the predetermined arrangement in the housing space S. Accordingly, the plate surface of the radio tag T is orthogonal to the opposing direction of the pair of inner surfaces 31a, 31b among the inner surfaces forming the housing space S, the radio tag T being attached to each of the predetermined number of articles G interposed between the partition plates 33.

Each of the outer surfaces corresponding to the inner surfaces 31a, 31b of the peripheral wall 31 opposes a respective one of the inner surfaces 21a, 21b of the first case body 20, and each of the outer surfaces corresponding to the inner surfaces 31c, 31d of the peripheral wall 31 opposes a respective one of the inner surfaces 21c and 21d of the first case body 20.

In particular, in the present embodiment, in a case where an opposing distance refers to the distance between the inner surface forming the housing space S and the opposing inner surface of the box 5 positioned outside the inner surface described above, opposing distances xₐ, x_{b} for the inner surfaces 31a, 31b are longer than the opposing distances for the other inner surfaces. In other words, the first distances xₐ, x_{b} between the inner surfaces 31a, 31b and the inner surfaces 21a, 21b of the box 5 respectively opposed by outer surfaces 31ax and 31bx of the peripheral wall 31 corresponding to the inner surfaces 31a, 31b are longer than second distances between the other inner surfaces other than the inner surface 31a, 31b and the inner surfaces of the box 5 respectively opposed by the outer surfaces of the peripheral wall 31 corresponding to the other inner surfaces described above. Specifically, as illustrated in FIGS. 3 and 5, the opposing distances xₐ, x_{b} for the inner surfaces 31a, 31b are longer than opposing distances x_{c}, x_{d} for the inner surfaces 31c, 31d and an opposing distance xₑ for the inner surface (bottom surface) of the bottom 32.

Here, the reason will be explained why the housing unit 30 has the structure as described above.

The plate-like radio tag is susceptible to an electromagnetic shield positioned in a direction orthogonal to the plate surface of the radio tag T, and thus a reduced distance from the plate surface to the electromagnetic shield increases the likelihood of failing in reading information from the housed radio tag T.

Accordingly, in the present embodiment, the plate surface of the radio tag T is orthogonal to the opposing direction of the pair of inner surfaces 31a, 31b among the inner surfaces forming the housing space S, the radio tag T being attached to each of the articles G housed in the predetermined arrangement by utilizing each partition plate 33 as described above. The opposing distances xₐ, x_{b} for the pair of inner surfaces 31a, 31b are longer than the opposing distances for the other inner surfaces. Thus, for each radio tag T, the distance from the plate surface to the box 5 in the direction orthogonal to the plate surface is longer than in a case where the opposing distances xₐ, x_{b} are the same as or shorter than the opposing distances x_{c}, x_{d}, xₑ. Accordingly, compared to this case, it is possible to suppress the influence of the box 5 on each radio tag T.

The second case body 40 includes a square closure portion 41 configured to close the opening of the first case body 20 to form the closed space, and four juncture portions 42 connected to the respective sides of the closure portion 41 corresponding to outer edges. The closure portion 41 is formed in such a manner that the outer edge of the closure portion 41 substantially aligns with the peripheral wall 21 forming the opening of the first case body 20. Additionally, with the opening of the first case body 20 closed utilizing the closure portion 41, each juncture portion 42 contacts an upper end side of the peripheral wall 21.

The cover portion 50 protects the box 5 inside which the housing space S is formed. The second case body 40 is held inside the cover portion 50. The cover portion 50 slidably guides the first case 11 inserted from the opening 51, to a position where the upper end side of the peripheral wall 21 of the first case body 20 contacts each juncture portion 42 of the second case body 40.

Each antenna board 3 includes a reading antenna 3a for reading information from the radio tag T attached to each article G. For example, the reading antenna 3a is an inverted-F array antenna of a four-point feeding configuration. The antenna boards 3 are arranged side by side in the upper portion of the closed space formed by the box 5, and are connected to the control board 4, which can thus perform reading processing utilizing each reading antenna 3a.

The control board 4 is provided with a control unit 60 functioning to perform reading processing of reading information from the radio tag T utilizing each reading antenna 3a, a storage that can store reading results and the like, and other components. The control unit 60 is realized by, for example, a processor such as a CPU (Central Processing Unit) or an MPU (Micro Processing Unit). The storage is realized by, for example, a memory such as a RAM (Random Access Memory) or a ROM (Read Only Memory). Note that a control apparatus having functions equivalent to those of the control board 4 may be disposed outside the housing 2 and that each antenna board 3 may be connected to the control apparatus via a predetermined terminal (not illustrated) provided on an outer surface of the cover portion 50, with the control apparatus operating similarly to the control board 4.

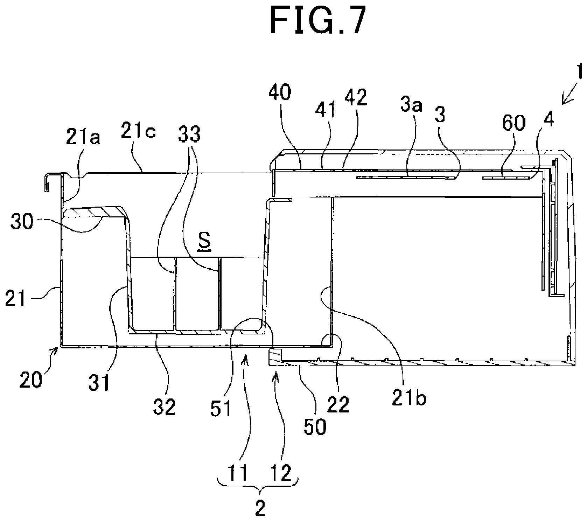

In the information reading apparatus 1 described above, a plurality of articles G to which the respective radio tag T are attached is housed in the housing unit 30 of the first case 11 withdrawn from the second case 12, as illustrated in FIGS. 6 and 7. Then, the first case 11 is pushed into the second case 12 to house the articles G in the closed space of the box 5 formed to suppress leakage of radio waves. The articles G are housed in the predetermined arrangement in the slide direction by the partition plates 33 of the housing unit 30. In such a housing state, the control unit 60 performs the reading processing utilizing each reading antenna 3a to read article information and the like from the radio tag T attached to each of the articles G.

In the housing state described above, the plate surface of each radio tag T is orthogonal to the opposing direction of the pair of the inner surfaces 31a, 31b forming the housing space S, and the opposing distances xₐ, x_{b} for the inner surfaces 31a, 31b are longer than the opposing distances x_{c}, x_{d} for the other inner surfaces 31c, 31d and the opposing distance xₑ for the inner surface (bottom surface) of the bottom 32. In such a housing state, even for the radio tag T housed near the inner surface 31a and the radio tag T housed near the inner surface 3 1b, the distance from the plate surface of the radio tag T to the box 5 in the direction orthogonal to the plate surface is longer than in a case where the opposing distances xₐ, x_{b} are the same as or shorter than the opposing distances x_{c}, x_{d}, xₑ. Accordingly, compared to this case, it is possible to suppress the influence of the box 5 on each radio tag T.

As described above, the information reading apparatus 1 according to the present embodiment includes the box 5 which suppresses outside leakage of radio waves, the housing unit 30 disposed in the box and housing the plurality of articles G in the predetermined arrangement, the at least one reading antenna 3a disposed in the box 5 for reading information from the radio tag T shaped like a plate and attached to the predetermined position of each of the plurality of articles G, and the control unit 60 performing reading processing of reading the information from the radio tag T in the housing unit 30 utilizing the at least one reading antenna 3a, wherein (a) the housing unit 30 houses the plurality of articles G in such a manner that the plate surface of the radio tag T attached to each of the plurality of articles G is orthogonal to the opposing direction of the pair of opposing inner surfaces 31a, 31b among the plurality of inner surfaces of the housing unit 30, and (b) the first distance xₐ, x_{b} between either one of the pair of inner surfaces 31a, 31b and the inner surface 21a, 21b of the box 5 opposed by the outer surfaces 3 1ax, 3 1bx of the housing unit 30 corresponding to the either one of the pair of inner surfaces 31ₐ, 31_{b} is longer than the second distance between the other inner surfaces among the plurality of inner surfaces of the housing unit 30 other than the pair of inner surfaces 31a, 31b and the inner surfaces of the box 5 opposed by the outer surfaces of the housing unit 30 corresponding to the other inner surfaces.

Thus, the distance from each radio tag T closest to one of the pair of inner surfaces 31a, 3 1b to the box 5 in the direction orthogonal to the plate surface of the radio tag is longer than in a case where the opposing distances xₐ, x_{b} are the same as or shorter than the opposing distances x_{c}, x_{d}, xₑ. Accordingly, compared to this case, it is possible to suppress the influence of the box 5 on each radio tag T. Additionally, the opposing distances x_{c}, x_{d}, xₑ for the other inner surfaces 31c, 31d, 32 are shorter than the opposing directions xₐ, x_{b} for the pair of inner surfaces 31a, 31b. Accordingly, compared to a case where the opposing distances x_{c}, x_{d}, xₑ are the same as or longer than the opposing distances xₐ, x_{b}, housing space S is larger, allowing for an increase in the number of articles G that can be housed. This enables an increase in the read rate for the information of the radio tag T in the housing space S, while securing the number of articles G that can be housed.

### <Second Embodiment>

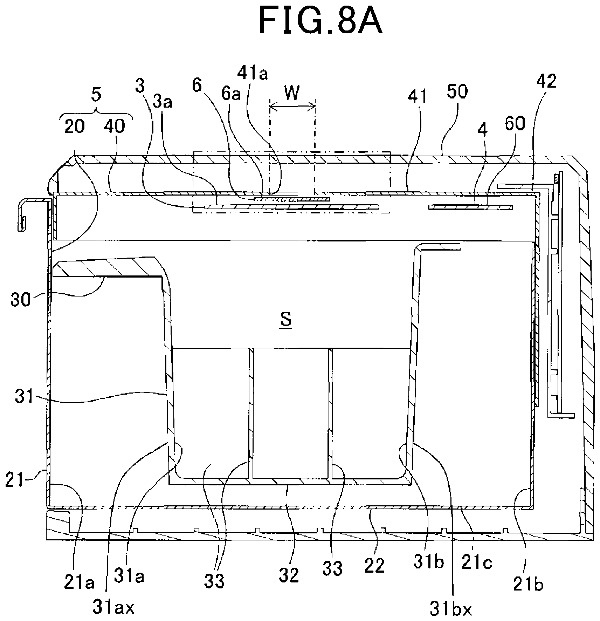

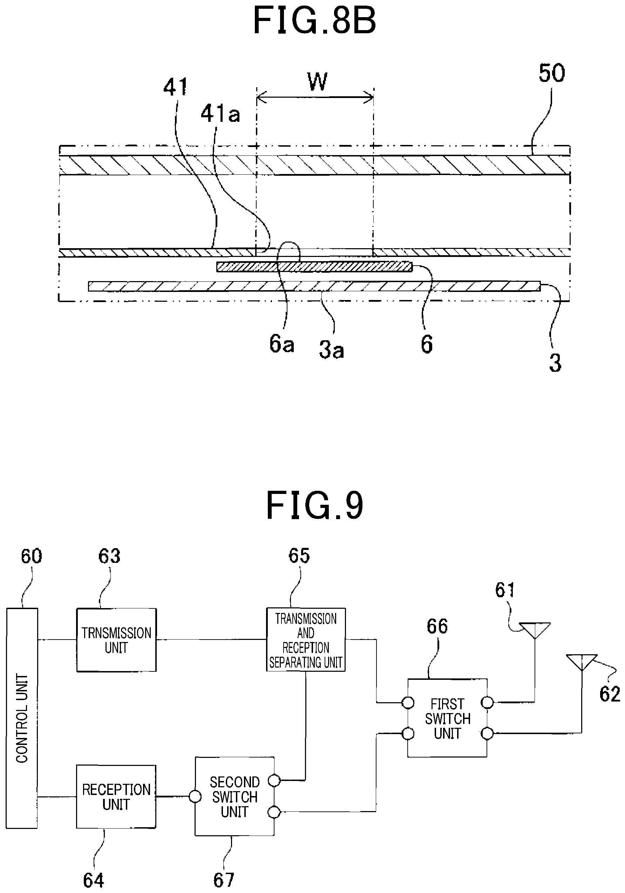

Now, an information reading apparatus according to a second embodiment of the present disclosure will be described below with reference to FIG. 8.

The second embodiment differs from the first embodiment mainly in that an antenna for external communication is disposed in a box. Therefore, substantially the same components as those of the first embodiment are denoted by the same reference numerals, and description of the components is omitted.

As illustrated in FIGS. 8A and 8B, in the information reading apparatus 1 according to the present embodiment, an antenna board 6 is disposed in the box 5, the antenna board 6 including an antenna for external communication 6a for communicating wirelessly with external equipment outside the box 5. The antenna board 6 is disposed above the antenna board 3 and closer to the closure portion 41, and connected to the control board 4 in such a manner as to enable processing of radio communication with external equipment to be performed by the control unit 60 utilizing the antenna for external communication 6a.

In a part of the closure portion 41 positioned immediately above the antenna board 6, a hole portion 41a for external communication is formed that penetrates the closure portion 41 in a precise circular shape. The hole portion 41a has a width W of λ2/4 or more and less than λ1/4. λ1 is the wavelength of a radio wave from the reading antenna 3a, and λ2 is the wavelength of a radio wave from the antenna for external communication 6a.

Thus, radio waves output from the antenna for external communication 6a are output to the outside of the box 5 through the hole portion 41a, whereas radio waves output from the reading antenna 3a cannot pass through the hole portion 41a. Accordingly, even when the antenna for external communication 6a is disposed in the box 5, radio communication with the external equipment is enabled for the information read from the radio tag T inside the box 5, and the like, with reading of the information from the radio tag T outside the box 5 suppressed.

Note that the hole portion 41a may be formed not only in the part of the closure portion 41 positioned immediately above the antenna board 6 (that is, the part of the second case body 40) but also in any other part of the box 5, for example, in the first case body 20. Additionally, the number of hole portions 41a is not limited to one for the box 5 and may be 2 or more.

In addition, the shape of the hole portion 41a is not limited to the precise circle as described above, and may be, for example, elliptical or square. The effect described above is produced in a case where for an ellipse, a longitudinal width (for a square, a diagonal width) is λ2/4 or more and less than λ1/4.

### <Third Embodiment>

Now, an information reading apparatus according to the present third embodiment will be described below with reference to FIG. 9.

The third embodiment differs from the first embodiment mainly in that a plurality of reading antennas operates as at least one of a transmitting antenna and a receiving antenna, and that switchable transmission and reception patterns are prepared: the transmission and reception pattern in which the same antenna is employed for transmission and reception, and the transmission and reception pattern in which different antennas are employed for transmission and reception. Therefore, substantially the same components as those of the first embodiment are denoted by the same reference numerals, and description of the components is omitted.

In a case where the reading processing is performed using one of the plurality of reading antennas disposed in the box 5, the information of the radio tag T that cannot have been read utilizing a certain reading antenna may be read utilizing another reading antenna. This is because different reading antennas have different null ranges (that is, areas where communication with the radio tags T is disabled). Accordingly, the number of selection patterns (that is, transmission and reception patterns) for antennas with different null ranges increases consistently with the number of reading antennas, thus allowing for an increase in the read rate for the information of the radio tag T. However, an increased number of reading antennas consistently increases the number of spaces for installation of the reading antennas, inhibiting miniaturization of the box 5.

Therefore, in the present embodiment, the information reading apparatus 1 performs the reading processing for each transmission and reception pattern to increase the number of transmission and reception patterns with the changing null range to increase the read rate, even with a small number of reading antennas. The plurality of reading antennas respectively operates as at least one of an antenna transmitting a signal to the radio tag T and an antenna receiving a signal from the radio tag T. Additionally, the transmission and reception pattern includes a pattern in which the same reading antenna is used for transmission and reception and a pattern in which different reading antenna are used for transmission and reception

The present embodiment employs, for example, two types of transmission and reception patterns utilizing two reading antennas (hereinafter referred to as a first antenna 61 and a second antenna 62). Specifically, the present embodiment employs a first transmission and reception pattern in which the first antenna 61 is used as both a transmission antenna and a reception antenna, a second transmission and reception pattern in which the second antenna 62 is used as both a transmission antenna and a reception antenna, a third transmission and reception pattern in which the first antenna 61 is used as a transmission antenna, whereas the second antenna 62 is used as a reception antenna, and a fourth transmission and reception pattern in which the second antenna 62 is used as a transmission antenna, whereas the first antenna 61 is used as a reception antenna. The first and second transmission and reception patterns are first type patterns in which the same antenna is used for transmission and reception, whereas the third and fourth transmission and reception patterns are second type patterns in which different antennas are used for transmission and reception.

As illustrated in FIG. 9, the control board 4 according to the present embodiment is provided with, in addition to the control unit 60, a transmission unit 63 and a reception unit 64, a transmission and reception separating unit 65, a first switch 66, and a second switch 67. The transmission unit 63 is controlled by the control unit 60 to transmit a predetermined signal to the radio tag T via the antenna, and the reception unit 64 receives a signal from the radio tag T via the antenna.

The transmission and reception separating unit 65 is provided between the transmission unit 63 and the first switch 66 and the second switch 67, and outputs a signal received from the transmission unit 63 to the first switch 66 and outputs a signal received from the first switch 66 to the second switch 67.

The first switch 66 is controlled by the control unit 60 to switch between a connected state in which the transmission and reception separating unit 65 is connected to the first antenna 61 during transmission and a connected state in which the transmission and reception separating unit 65 is connected to the second antenna 62 during transmission. Additionally, the first switch 66 switches between a connected state in which the transmission and reception separating unit 65 is connected to the antenna that has been utilized for transmission and utilized for reception during reception (that is, a first type pattern) and a connected state in which the second switch 67 is connected to the antenna that has not been utilized for transmission and utilized for reception during reception (that is, a second type pattern). In the present embodiment, a DPDT (Double Pole Double Throw) switch is employed as the first switch 66. For example, the connected state is switched depending on the determined transmission and reception pattern, and transmission and reception are performed. Note that unconnected antennas do not operate as transmission and reception antennas.

The second switch 67 is controlled by the control unit 60 to switch between a connected state in which the transmission and reception separating unit 65 is connected to the reception unit 64 (that is, a first type pattern) and a connected state in which the first switch 66 is connected to the reception unit 64 (that is, a second type pattern). In the present embodiment, a SPDT (Single Pole Double Throw) switch is employed as the second switch 67.

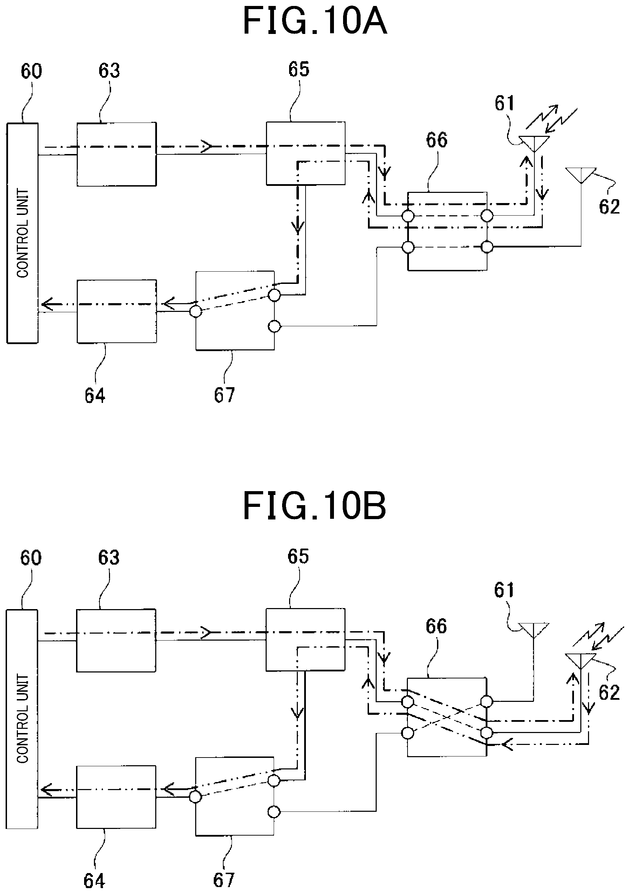

The control board 4 is configured as described above, and thus in a first transmission and reception pattern, a transmission signal output from the transmission unit 63 is transmitted via the transmission and reception separating unit 65, the first switch 66, and the first antenna 61 as illustrated in FIG. 10A. Additionally, in response to the transmission, a response signal is input to the reception unit 64, the response signal being received via the first antenna 61, the first switch 66, the transmission and reception separating unit 65, and the second switch 67.

In a second transmission and reception pattern, a transmission signal output from the transmission unit 63 is transmitted via the transmission and reception separating unit 65, the first switch 66, and the second antenna 62 as illustrated in FIG. 10B. In response to the transmission, a response signal is input to the reception unit 64, the response signal being received via the second antenna 62, the first switch 66, the transmission and reception separating unit 65, and the second switch 67.

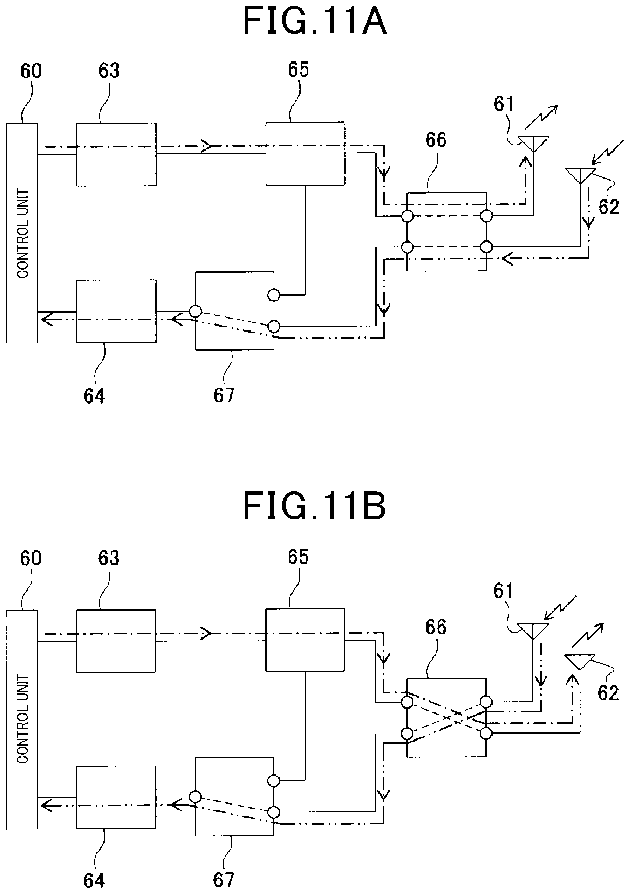

In a third transmission and reception pattern, a transmission signal output from the transmission unit 63 is transmitted via the transmission and reception separating unit 65, the first switch 66, and the first antenna 61 as illustrated in FIG. 11A. In response to the transmission, a response signal is input to the reception unit 64, the response signal being received via the second antenna 62, the first switch 66, and the second switch 67.

In a fourth transmission and reception pattern, a transmission signal output from the transmission unit 63 is transmitted via the transmission and reception separating unit 65, the first switch 66, and the second antenna 62 as illustrated in FIG. 11B. In response to the transmission, a response signal is input to the reception unit 64, the response signal being received via the first antenna 61, the first switch 66, and the second switch 67.

In the reading processing performed by the control unit 60 in the present embodiment, information is read from each radio tag T for each transmission and reception pattern that is the first type or second type pattern, and the result of collating the read information with stored information is acquired as a reading result. Specifically, a collation is made among the information read using the first transmission and reception pattern, the information read using the second transmission and reception pattern, the information read using the third transmission and reception pattern, and the information read using the fourth transmission and reception pattern. At this time, for example, in a case where a match is found between at least two of the pieces of information read using the first to fourth transmission and reception patterns, the radio tag T is determined to be housed in the housing unit 30. In a case where none of the pieces of information are matched, the radio tag T is determined not to be housed in the housing unit 30, that is, determined to be a radio tag outside the box 5.

As described above, the information reading apparatus 1 according to the present embodiment performs the reading processing for each transmission and reception pattern that is a selection pattern for the reading antenna used for transmission and reception. The plurality of reading antennas operates as at least one of an antenna transmitting a signal to the radio tag T and an antenna receiving a signal from the radio tag T. Additionally, the transmission and reception pattern includes a pattern in which the same reading antenna is used for transmission and reception and a pattern in which different reading antenna are used for transmission and reception

Thus, for example, in a case where two reading antennas (61, 62) are disposed, four types of transmission and reception patterns can be employed. With this, it is possible to increase in the number of transmission and reception patterns with different null ranges to make the number greater than or equal to the number of reading antennas. Therefore, the read rate for the information of the radio tag T can be increased without inhibiting miniaturization of the box 5.

Note that the present embodiment is applicable to an information reading apparatus that houses articles G with non-uniform shapes. For example, any housing unit for which the articles G can be housed in the box 5 may be employed as well as the housing unit 30 provided with the partition plates 33 as described above. Additionally, the articles G may be housed in the box 5 without the housing unit. Therefore, the information reading apparatus can be defined as follows in which a plurality of reading antennas operates as at least one of a transmitting antenna and a receiving antenna, and which is configured to be able to switch the transmission and reception pattern in which the same antenna is employed for transmission and reception and the transmission and reception pattern in which different antennas are employed for transmission and reception. That is, the information reading apparatus includes a box which houses a plurality of articles inside and suppresses outside leakage of radio waves, a plurality of antennas disposed in the box and for communicating wirelessly with a radio tag attached to each of the plurality of articles, and a control unit performing reading processing to read information from the radio tag inside the box utilizing the plurality of antennas, and the plurality of antennas respectively operates as at least one of an antenna transmitting a signal to the radio tag and an antenna receiving a signal from the radio tag, and the control unit performs the reading processing for each transmission and reception pattern that is a selection pattern for the antennas used for transmission and reception, and the transmission and reception pattern includes a pattern in which the same antenna is used for transmission and reception and a pattern in which different antennas are used for transmission and reception.

The information reading apparatus configured as described above can also increase the number of transmission and reception patterns with different null ranges to make the number greater than or equal to the number of reading antennas, allowing for an increase in the read rate of information from the radio tag T without inhibiting miniaturization of the box 5.

In a modification example of the present embodiment and the like, switching of a transmission frequency (channel) in a time division manner may be used in addition to switching between the transmission and reception pattern in which the same reading antenna is used for transmission and reception and the transmission and reception pattern in which different reading antennas are used for transmission and reception. Thus, even though the same reading antenna is used for transmission and reception, the read rate for the information of the radio tag T can further be increased.

Note that in the reading processing performed by the control unit 60, the transmission and reception pattern may be switched at regular intervals. Additionally, the switching timing for the transmission and reception pattern may be changed depending on the number of radio tags T related to the read information or the like.

Additionally, the present embodiment is not limited to two reading antennas (first antenna 61 and second antenna 62) as describe above, and three or more reading antennas may be employed. In this case, during transmission, the first switch 66 switches the connected state of the transmission and reception separating unit 65 and each reading antenna. Additionally, the first switch 66 switches between a connected state in which the transmission and reception separating unit 65 is connected to the antenna that has been utilized for transmission and utilized for reception during reception and a connected state in which the second switch 67 is connected to the antenna that has not been utilized for transmission and utilized for reception during reception. Note that, for example, in a case where four reading antennas are employed, the first switch 66 may be a DP4T switch and may include three switches in which a SPDT switch is connected to each of two antenna-side terminals of the DPDT switch.

### <Fourth Embodiment>

Now, an information reading apparatus according to a fourth embodiment of the present disclosure will be described below with reference to the drawings.

The fourth embodiment differs from the first embodiment mainly in that a predetermined threshold and transmit power are set according to the number of radio tags, the predetermined threshold being used to determine whether the radio tag T is housed in the box 5. Therefore, substantially the same components as those of the first embodiment are denoted by the same reference numerals, and description of the components is omitted.

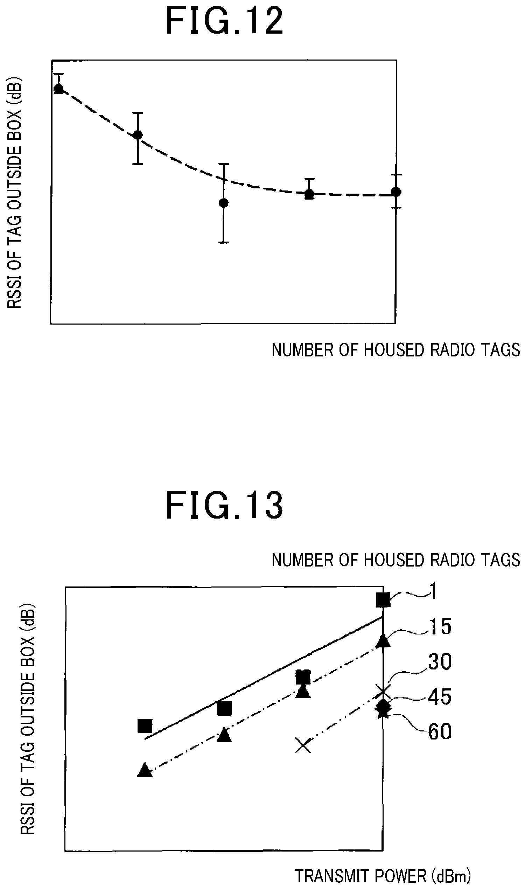

When a plurality of the radio tags T is densely housed in the box 5, a received signal strength (RSSI (Received Signal Strength Indicator) value) of a response wave received from each radio tag T tends to decrease. On the other hand, as seen in FIGS. 12 and 13, the received signal strength of the response wave received from the radio tag T outside the box 5 is higher with the smaller number of radio tags T housed in the box 5 (hereinafter referred to as the number of housed radio tags). Accordingly, when the predetermined threshold (hereinafter referred to as a housing determination threshold) is reduced that is used to determine whether the radio tag is housed in the box 5 based on the received signal strength, the radio tag T outside the box 5 may be erroneously determined to be housed in the box 5 in a case where the number of radio tags T decreases.

Additionally, the transmit power for transmitting a signal from the reading antenna to the radio tag T is increased to read information from the radio tags T densely housed in the box 5. On the other hand, as seen in FIG. 13, the received signal strength of the response wave received from the radio tag T outside the box 5 increases consistently with the transmit power. Accordingly, when the transmit power increases based on the assumption that the radio tags T are closely spaced, the radio tag T outside the box 5 may be erroneously determined to be housed in the box 5 in a case where the number of housed radio tags T decreases.

Therefore, in the present embodiment, in the reading processing performed by the control unit 60, by setting the transmit power and the housing determination threshold according to the number of radio tags T previously correctly determined to be housed in the box 5, erroneous determination for the radio tag T outside the box 5 can be suppressed, the erroneous determination being caused by a variation in the number of housed radio tags.

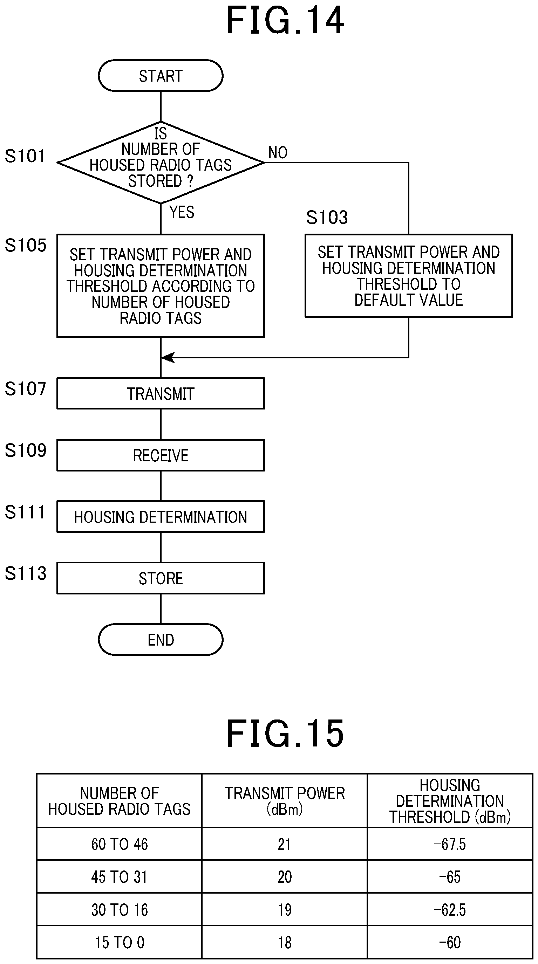

Now, the reading processing performed by the control unit 60 in the present embodiment will be described below in detail with reference to a flowchart in FIG. 14. Note that the housing state of each article G housed in the housing space S of the box 5 may be changed due to moving in and out of the first case 11, and thus, in the present embodiment, the reading processing is performed each time the first case 11 is moved in and out (that is, each time the box 5 is opened and closed). Accordingly, the box 5 is provided with a known open/close sensor, and the open/close sensor detects opening and closing of the box 5.

When the control unit 60 starts the reading processing in response to detecting opening and closing of the box 5 by the open/close sensor described above, in determination processing depicted in step S101 in FIG. 14, it is determined whether the storage stores the number of housed radio tags T. Here, in a case where the storage does not store the number of housed radio tags T as described below (No in S101), the transmit power and the housing determination threshold are set to predefined default values (that is, initial values) (S103).

When the reading antenna transmits a signal using the transmit power set as described above (S107), a response wave is received from the radio tag T having received the transmitted signal (S109).

Subsequently, the housing determination processing depicted in step S111 is performed. In the housing determination processing, the received signal strength of the response wave received from the radio tag T is compared with the housing determination threshold set to the default value as described above. According to the result of the comparison, whether the radio tag T is housed in the box 5 is determined. For example, in a case where the received signal strength is greater than or equal to the housing determination threshold, the radio tag T is determined to be housed in the box 5. On the other hand, in a case where the received signal strength is less than the housing determination threshold, the radio tag T is determined not to be housed in the box 5 (in other words, the radio tag T is determined to be outside the box 5), and the information read from the radio tag T is discarded. Note that the control unit 60 determining whether the radio tag T is housed in the box 5 according to the result of the comparison between received signal strength of the response wave received from the radio tag T and the housing determination threshold, may correspond to an example of a determination unit.

Then, in storage processing depicted in step S113, the number of radio tags T determined to be housed in the box 5 as described above is stored in the storage together with information identifying each radio tag T. Then, the reading processing ends.

Subsequently, opening and closing of the box 5 are newly detected, and the control unit 60 starts the reading processing again. Since the storage stores the number of housed radio tags T as described above (Yes in S 101), the transmit power and the housing determination threshold are set according to the number of housed radio tags stored in the storage (S 105).

In the present embodiment, as illustrated in FIG. 15, the storage previously stores the transmit power and the housing determination threshold taking into account the housing structure of the housing unit 30 and the like, the transmit power and the housing determination threshold being depending on the number of housed radio tags. Accordingly, for example, in a case where the last reading processing results in 40 being stored in the storage as the number of housed radio tags, the transmit power is set to 20 dBm, and the housing determination threshold is set to -65dBm.

Referring back to FIG. 14, subsequently, a signal is transmitted using the transmit power set according to the number of housed radio tags as described above (S107), and a response wave is received from the radio tag T having received the transmitted signal (S109). In a case where the received signal strength is greater than or equal to the housing determination threshold set according to the number of housed radio tags as described above, the radio tag T is determined to be housed in the box 5 (S111). Then, the storage stores the number of radio tags T determined to be housed in the box 5, and the like (S113). On the other hand, in a case where the received signal strength is less than the housing determination threshold described above, the radio tag T is determined not to be housed in the box 5 (in other words, the radio tag T is determined to be outside the box 5), and the information read from the radio tag T is discarded.

As described above, according to the result of the comparison between the predetermined threshold corresponding to the transmit power for a signal transmitted via the at least one reading antenna and the received signal strength of a signal received from the radio tag, the control unit 60 of the information reading apparatus 1 according to the present embodiment determines whether the radio tag T that is a source of the received signal is housed in the box 5. The transmit power and the predetermined threshold is set according to the number of radio tags T previously determined to be housed in the box 5.

By setting the transmit power and the predetermined threshold according to the number of radio tags T determined to be housed in the box 5, erroneous determination for the radio tag T outside the box 5 can be suppressed, the erroneous determination being caused by a variation in the number of housed radio tags T. This allows for an increase in the accuracy of reading of information from the radio tag T.

Note that the present embodiment is applicable to an information reading apparatus that houses articles G with non-uniform shapes. For example, any housing unit for which the articles G can be housed in the box 5 may be employed as well as the housing unit 30 provided with the partition plates 33 as described above. Additionally, the articles G may be housed in the box 5 without the housing unit. Therefore, the information reading apparatus can be defined as follows in which the housing determination threshold and the transmit power used to determine whether the radio tag T is housed in the box 5 are set according to the number of radio tags T. That is, the information reading apparatus include a box which internally houses a plurality of articles and suppresses outside leakage of radio waves; at least one inside-box antenna disposed in the box to communicate wirelessly with a radio tag attached to each of the plurality of articles; at least one outside-box antenna disposed outside the box to communicate wirelessly with a radio tag; and a control unit performing reading processing of reading information from a radio tag utilizing the at least one inside-box antenna and the at least one outside-box antenna, wherein the control unit determines whether the radio tag that is a source of the received signal is housed in the box based on a received signal strength of a signal received by the at least one inside-box antenna from a radio tag and a received signal strength of a signal received by the at least one outside-box antenna from a radio tag.

Also, in the information reading apparatus configured as described above, by setting the transmit power and the housing determination threshold according to the number of radio tags T determined to be housed in the box 5, erroneous determination for the radio tag T outside the box 5 can be suppressed, the erroneous determination being caused by a variation in the number of housed radio tags T. This allows for an increase in the accuracy of reading of information from the radio tag T.

A first modification example of the present embodiment is not limited to setting of the transmit power and the housing determination threshold based on the last number of housed radio tags. The reading accuracy of the radio tag T may further be increased by utilizing temporarily set transmit power and housing determination threshold to temporarily calculate the number of housed radio tags T, re-setting the housing determination threshold based on the temporarily calculated number of housed radio tags, and utilizing the re-set housing determination threshold to determine whether the radio tag T is housed in the box 5.

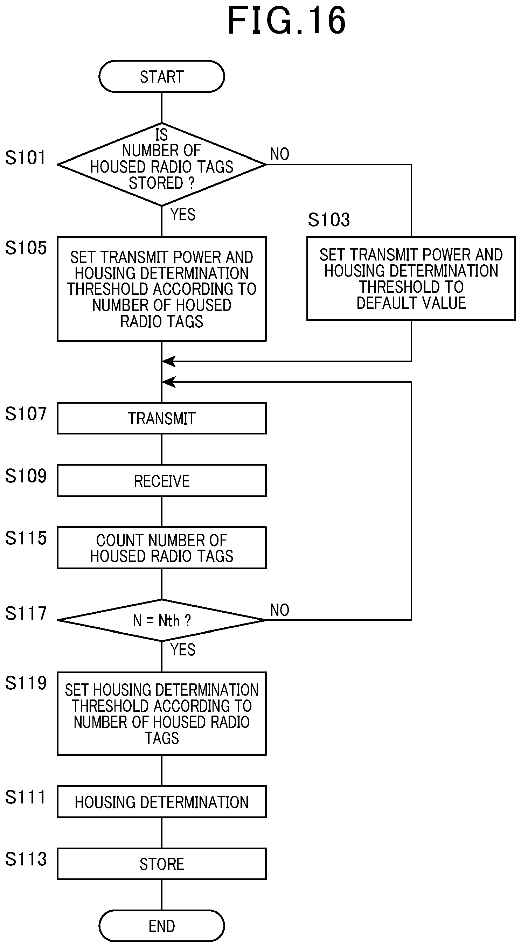

Specifically, as in the flowchart illustrated in FIG. 16, the transmit power and the housing determination threshold are set to the default values (S103) or set according to the last stored number of housed radio tags (S105). A signal is transmitted using the set transmit power (S107), and a response wave is received from the radio tag T having received the transmitted signal (S109). The number of radio tags T determined to be housed in the box 5 is counted based on the result of the comparison between the received signal strength of the received signal and the set housing determination threshold (S115). Subsequently, the determination in the determination processing in step S117 is No until the number of times N that the same number of housed radio tags as the last counted number of housed radio tags is counted becomes a predetermined number of times Nth (for example, three times). In S117, in a case where the determination is No, the processing in S107, S109, and S115 is performed again without a change in the transmit power and the housing determination threshold.

When the state of radio waves in the box 5 is stable, the state continues in which the same number of housed radio tags as the last counted number of housed radio tags is counted. That is, the number of times N becomes the predetermined number of times Nth. When the number of times N becomes the predetermined number of times Nth (Yes in S117), the housing determination threshold is re-set according to the counted number of housed radio tags (S119). Subsequently, the housing determination processing depicted in step S111 is performed, and the radio tag T is determined to be housed in the box 5, the received signal strength of the response wave already received from the radio tag T being greater than or equal to the housing determination threshold re-set as described above.

Note that the present embodiment is not limited to the re-setting of only the housing determination threshold as described above and that the transmit power may also be re-set. For example, by utilizing both the transmit power and the housing determination threshold re-set based on the temporary number of housed radio tags, whether the radio tag T is housed in the box 5 may be determined. This may increase the accuracy of reading of information from the radio tag T. Note that in this case, after the transmit power is re-set, the processing in steps S107 and S109 is performed.

In a second modification example of the present embodiment and the like, the transmit power and the housing determination threshold may be set for every plurality of reading antennas according to the number of radio tags T previously determined to be housed in the box 5. Depending on the positional relationship between each reading antenna and the gap between the first case body 20 and the second case body 40, that is, the gap in the opening and closing portion of the box 5, the influence of leakage of radio waves from the gap may change. Accordingly, the influence of the response wave received from the radio tag T outside the box 5 may vary with each reading antenna. Thus, the accuracy of reading of information from the radio tag T can further be increased by setting each of the transmit power and predetermined threshold suitable for each reading antenna according to the number of radio tags.

### <Fifth Embodiment>

Now, an information reading apparatus according to a fifth embodiment of the present disclosure will be described with reference to the drawings.

The fifth embodiment differs from the first to fourth embodiments described above mainly in that the reading antenna is also disposed outside the box 5. Therefore, substantially the same components as those of the first to fourth embodiments are denoted by the same reference numerals, and description of the components is omitted.

The information reading apparatus includes a housing box having the shielding property of suppressing outside leakage of radio waves, that is, includes a box. However, the box does not perfectly prevent the leakage of radio waves. Accordingly, a radio wave may reach the radio tag outside the box and the information of the radio tag outside the box is read. A possible measure is to improve the shielding property of the box. However, an improved shielding property increases the cost of the box.

Therefore, in the present embodiment, the information reading apparatus includes at least one outside-box antenna disposed outside the box to communicate wirelessly with the radio tag, and the control unit performs reading processing of reading information from the radio tag utilizing at least one inside-box antenna and the at least one outside-box antenna, and determines whether the radio tag that is a source of the received signal is housed in the box based on the received signal strength of the signal received by the at least one inside-box antenna from the radio tag and the received signal strength of the signal received by the at least one outside-box antenna from the radio tag. The present embodiment will be described below in detail using each example.

### <First Example>

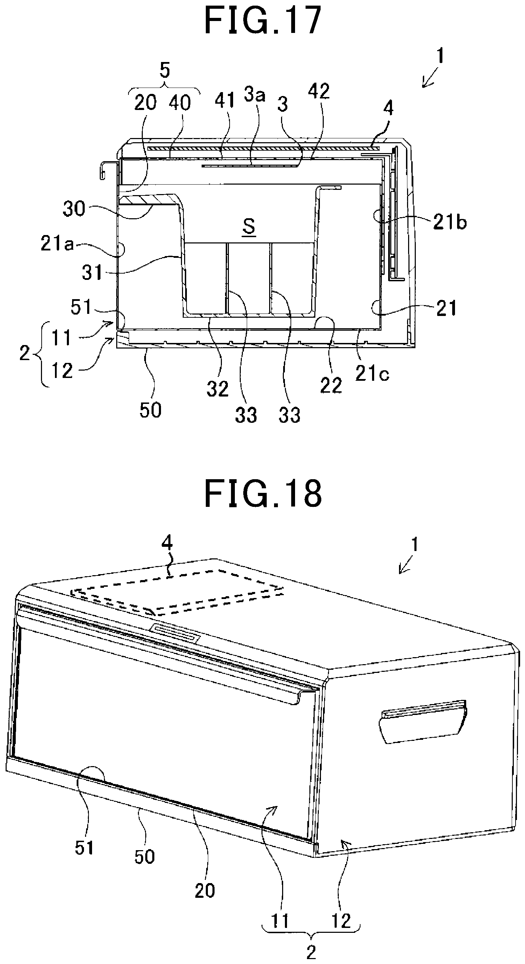

In a first example of the present embodiment, the information reading apparatus 1 includes at least one reading antenna disposed outside the box 5 to communicate wirelessly with the radio tag T (hereinafter referred to as an outside-box antenna). For example, as illustrated in FIG. 17, the information reading apparatus 1 includes, outside the box 5, the control board 4 including an outside-box antenna, and the control board 4 is installed on the upper surface of the box 5 in a placed state. In other words, the control board 4 is installed on a surface of the box 5 in an opening direction of the first case body 20 provided in the box 5. Additionally, as illustrated in FIG. 18, the control board 4 is installed at an end of the information reading apparatus 1 in a long side direction. Note that the control board 4 may be installed in a location other than the location described above. For example, the control board 4 may be installed in any location outside the box 5 within the information reading apparatus 1.

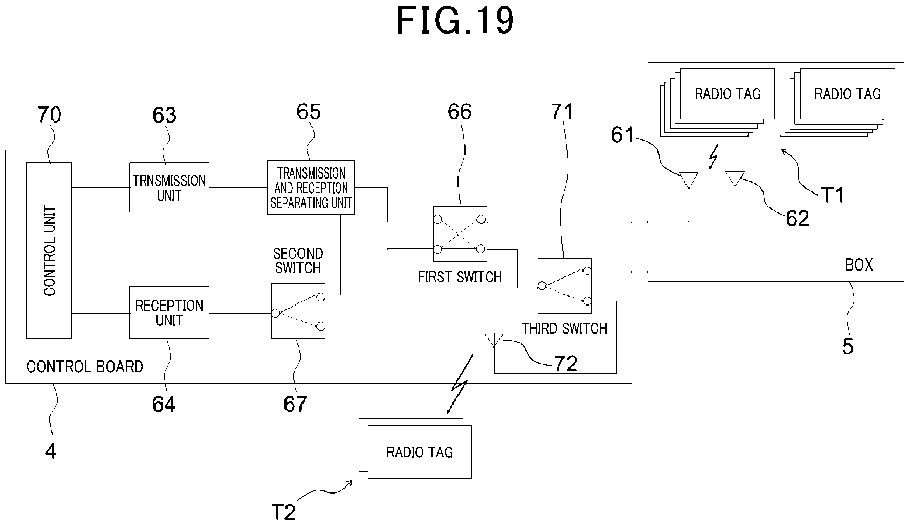

As illustrated in FIG. 19, the control board 4 is provided with a control unit 70, a transmission unit 63, a reception unit 64, a transmission and reception separating unit 65, a first switch 66, a second switch 67, a third switch 71, and a third antenna 72 as an outside-box antenna. Note that for substantially the same components as those in the first to fourth embodiments, description is omitted.

In addition to controlling operations of the transmission unit 63, the first switch 66, and the second switch 67 similarly to the control unit 60, the control unit 70 controls operations of a third switch 71. Additionally, the control unit 70 performs reading processing of reading information from the radio tag T utilizing the first antenna 61 and the second antenna 62 (hereinafter referred to as inside-box antennas) and a third antenna 72. Note that the radio tag T transmits a signal based on a collision avoidance protocol and that even with a plurality of radio tags T present, signals transmitted from the radio tags T are received via the reading antenna without any collision.

For example, in a case of reading information from the radio tag T using the first antenna 61 and the second antenna 62, the control unit 70 connects the first antenna 61 and the transmission unit 63 to the first switch 66, and connects the second antenna 62 and the reception unit 64 to the third switch 71, the first switch 66, and the second switch 67. Additionally, in a case of reading information from the radio tag T using the third antenna 72, the control unit 70 connects the third antenna 72 and the reception unit 64 to the third switch 71, the first switch 66, and the second switch 67.

Here, when the inside-box antenna communicates with a radio tag T1 inside the box 5, a radio wave output from the inside-box antenna may leak to the outside of the box 5. When the leaking radio wave reaches a radio tag T2 outside the box 5, the radio tag T2 outputs a response wave, which may reach the inside-box antenna. As a result, the information of the radio tag T2 outside the box 5 may unintentionally be read.

Therefore, the control unit 70 determines whether the radio tag T that is a source of the received signal is housed in the box 5 based on the received signal strength of the signal received by the inside-box antenna from the radio tag T and the received signal strength of the signal received by the outside-box antenna from the radio tag T. Specifically, the control unit 70 determines whether the radio tag T that is a source of the received signal is housed in the box 5 based on the magnitude relationship between the received signal strength of the signal received by the inside-box antenna from the radio tag T and the received signal strength of the signal received by the outside-box antenna from the radio tag T.

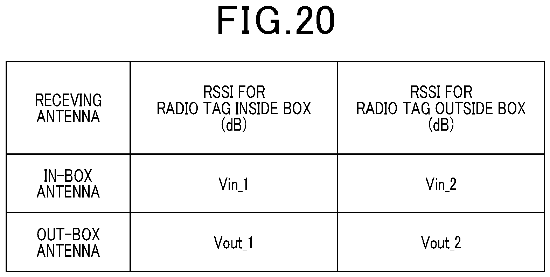

More specifically, the control unit 70 first performs the reading processing using the inside-box antenna to acquire a first received signal strength. Then, the control unit 70 performs the reading processing using the outside-box antenna to acquire a second received signal strength. Then, the control unit 70 determines whether the radio tag T is housed in the box 5 based on the magnitude relationship between the first received signal strength and the second received signal strength. The determination processing will be described in detail with reference to FIG. 20.

For example, first, the control unit 70 causes the transmission unit 63 to transmit a signal via the first antenna 61. In a case where as a response to the transmission, the radio tag T1 inside the box 5 transmits a signal, the control unit 70 acquires Vin_1 that is the RSSI of a signal received by the reception unit 64 via the second antenna 62. Then, the control unit 70 causes the transmission unit 63 to transmit a signal via the third antenna 72. In a case where as a response to the transmission, the radio tag T1 inside the box 5 transmits a signal, the control unit 70 acquires Vout_1 that is the RSSI of a signal received by the reception unit 64 via the third antenna 72. Here, since the radio tag T1 is inside the box 5, radio waves used for the communication between the radio tag T1 and both the first antenna 61 and second antenna 62 are unsusceptible to attenuation caused by the shielding property of the box 5. On the other hand, radio waves used for the communication between the third antenna 72 and the radio tag T1 pass through the box 5 and are thus affected by attenuation caused by the shielding property of the box 5. Accordingly, Vin_1 is greater than Vout_1. Therefore, in a case where Vin_1 > Vout_1, the control unit 70 determines that the radio tag T is housed in the box 5.

Additionally, for example, first, the control unit 70 causes the transmission unit 63 to transmit a signal via the first antenna 61. In a case where as a response to the transmission, the radio tag T2 outside the box 5 transmits a signal, the control unit 70 acquires Vin_2 that is the RSSI of a signal received by the reception unit 64 via the second antenna 62. Then, the control unit 70 causes the transmission unit 63 to transmit a signal via the third antenna 72. In a case where as a response to the transmission, the radio tag T2 outside the box 5 transmits a signal, the control unit 70 acquires Vout_2 that is the RSSI of a signal received by the reception unit 64 via the third antenna 72. Here, since the radio tag T2 is outside the box 5, radio waves used for the communication between the radio tag T2 and both the first antenna 61 and second antenna 62 are affected by attenuation caused by the shielding property of the box 5 when the radio waves pass through the box 5. On the other hand, radio waves used for the communication between the third antenna 72 and the radio tag T2 do not pass through the box 5 and are thus not affected by attenuation caused by the shielding property of the box 5. Accordingly, Vout_2 is greater than Vin_2. Therefore, in a case where Vout_2 > Vin_2, the control unit 70 determines that the radio tag T is not housed in the box 5.

The third switch 71 is controlled by the control unit 70 to switch between a connected state in which the second antenna 62 is connected to the reception unit 64 via the first switch 66 and the second switch 67 and a connected state in which the third antenna 72 is connected to the reception unit 64 via the first switch 66 and the second switch 67. The third switch 71 may be an SPDT switch.

The third antenna 72 is disposed outside the box 5 and communicates wirelessly with the radio tag T. For example, the third antenna 72 operates as an antenna for transmission and reception. Note that a plurality of third antennas 72 may be disposed and that in that case, the third antenna 72 operating as a transmitting antenna and the third antenna 72 operating as a receiving antenna may be separately provided.

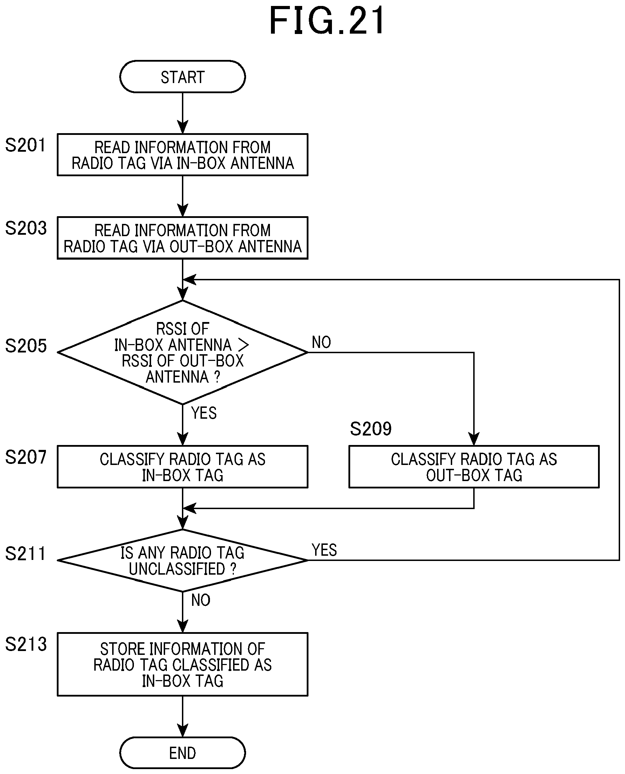

Now, with reference to FIG. 21, the processing in the first example of the present embodiment will be described.

First, the control unit 70 reads information from the radio tag T via the inside-box antenna (step S201). For example, the control unit 70 reads information from the radio tag T via the first antenna 61 and the second antenna 62. The control unit 70 acquires a first RSSI of a signal received from the radio tag T of which the information has been successfully read. Additionally, the control unit 70 stores the number of radio tags T from which the information has been read.

Then, the control unit 70 reads information from the radio tag T via the outside-box antenna (step S203). For example, the control unit 70 reads information from the radio tag T via the third antenna 72. The control unit 70 acquires a second RSSI of a signal received from the radio tag T of which the information has been successfully read.

The control unit 70 determines whether the RSSI of the inside-box antenna is greater than the RSSI of the outside-box antenna (step S205). For example, the control unit 70 determines whether the first RSSI is greater than the second RSSI.

In a case where the RSSI of the inside-box antenna is greater than the RSSI of the outside-box antenna, the control unit 70 classifies the radio tag T as an inside-box tag T1 (step S207). For example, in a case where the first RSSI is greater than the second RSSI, the control unit 70 determines that the radio tag T is inside the box 5, and classifies the radio tag T as an inside-box tag T1.

In a case where the RSSI of the inside-box antenna is less than or equal to the RSSI of the outside-box antenna, the control unit 70 classifies the radio tag T as an outside-box tag T2 (step S209). For example, in a case where the first RSSI is less than or equal to the second RSSI, the control unit 70 determines that the radio tag T is outside the box 5 and classifies the radio tag T as an outside-box tag T2.

The control unit 70 determines whether any radio tag T is unclassified (step S211). For example, the control unit 70 determines whether the number of processing operations in steps S205 to S209 has reached the number of radio tags T stored in step S201.

In a case where no radio tag T is unclassified, the control unit 70 causes the storage to store the information of the radio tag T classified as the inside-box tag T1 (step S213). For example, in a case where the number of processing operations in steps S205 to S209 reaches the number of radio tags T stored in the step S201, the control unit 70 causes the storage to store the information of the radio tag T classified as the inside-box tag T1. Note that in a case where any radio tag is unclassified, the processing returns to step S205.

As described above, according to the first example of the fifth embodiment, the information reading apparatus 1 includes the at least one outside-box antenna disposed outside the box 5 to communicate wirelessly with the radio tag T, and the control unit 70 performs the reading processing of reading information from the radio tag T utilizing the at least one inside-box antenna and the at least one outside-box antenna, and determines whether the radio tag T that is a source of the received signal is housed in the box 5 based on the received signal strength of the signal received by the at least one inside-box antenna from the radio tag T and the received signal strength of the signal received by the at least one outside-box antenna from the radio tag T.

By using not only the inside-box antenna but also the outside-box antenna, whether the radio tag T is housed in the box 5 can be identified. This allows, without improving the shielding property of the box 5, suppression of leakage of the information of the radio tag T2 outside the box 5 into the information of the radio tag T1 inside the box 5 due to radio waves leaking from the box 5. That is, with an increase in costs suppressed, the information of the radio tag T2 outside the box 5 can be restrained from leaking into the information of the radio tag T1 inside the box 5.

Additionally, the control unit 70 determines whether the radio tag T that is a source of the received signal is housed in the box 5 based on the magnitude relationship between the received signal strength of the signal received by the at least one inside-box antenna from the radio tag T and the received signal strength of the signal received by the at least one outside-box antenna from the radio tag T.

For the received signal strength of the signal from the radio tag T2 outside the box 5, the one of the signal received by the outside-box antenna is greater than the one of the signal received by the inside-box antenna. Accordingly, by comparing the magnitude of the received signal strength between the inside-box antenna and the outside-box antenna, whether the radio tag T is housed in the box 5 can be determined.

Additionally, the information reading apparatus 1 includes the control board 4 including the control unit 70 and the at least one outside-box antenna, and the control board 4 is installed outside the box 5.

In this manner, the outside-box antenna is incorporated into the control board 4. This allows for a reduction in installation cost of the outside-box antenna compared to a case where the outside-box antenna is independently installed.

Now, a modification example of the first example of the present embodiment will be described. In the first embodiment described above, the outside-box antenna is incorporated into the control board 4. However, the installation location of the outside-box antenna is not limited to this.

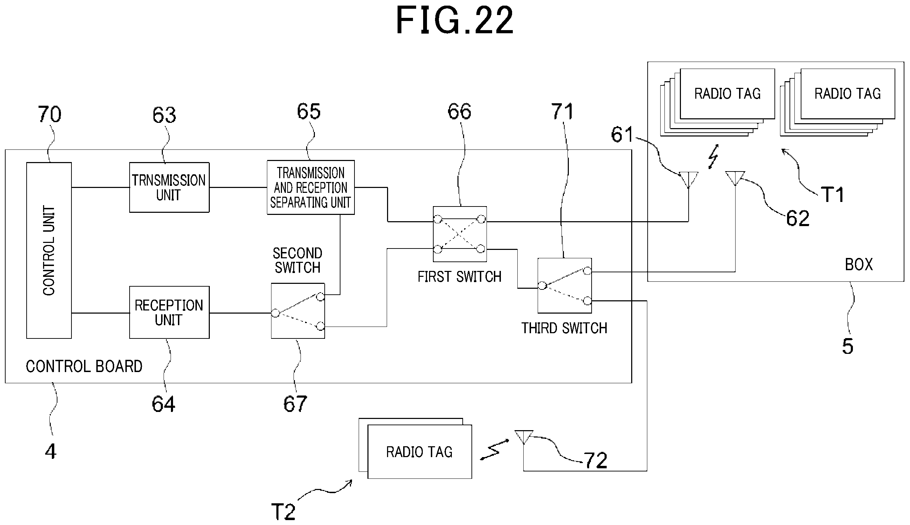

An outside-box antenna according to the modification example of the first example is disposed outside the control board 4. Specifically, as illustrated in FIG. 22, the third antenna 72 is installed at any location inside the information reading apparatus 1 and outside the box 5 and outside the control board 4. This allows for an increase in the degree of freedom for the installation location of the outside-box antenna. Additionally, in this case, the control board 4 may be installed in any location inside or outside the box 5.

For example, the third antenna 72 may be installed in the center of the upper surface of the box 5 rather than at an end of the upper surface of the box 5 such as the installation location of the control board 4 illustrated in FIG. 18. In a case where the outside-box antenna is installed in the center of the upper surface of the box 5, the communication range of the outside-box antenna covering the box 5 (that is, the information reading apparatus 1) can be extended. As a result, regardless of wherever on the upper surface of the information reading apparatus 1 along the upper surface of the box 5 the radio tag T2 outside the box 5 is put, the performance of communication between the outside-box antenna and the radio tag T2 can be stabilized.

### <Second Example>

Now, a second example of the present embodiment will be described. In the second example of the present embodiment, the outside-box antenna is wiring installed on the control board 4. Accordingly, the control board 4 is disposed outside the box 5. For example, the control board 4 is installed on the upper surface of the box 5 in the placed state as in the case of the first example. However, unlike in the case of the first example, the installation location of the control board 4 according to the second example is limited to the outside of the box 5.

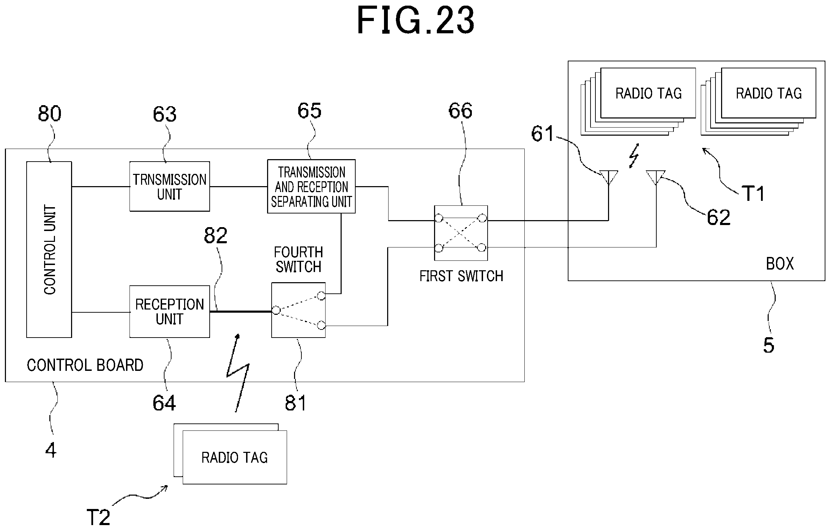

As illustrated in FIG. 23, the control board 4 is provided with a control unit 80, the transmission unit 63, the reception unit 64, the transmission and reception separating unit 65, the first switch 66, a fourth switch 81, and wiring 82 as an outside-box antenna. Note that for substantially the same components as those in the first to fourth embodiments, description is omitted.

In addition to controlling operations of the transmission unit 63 and the first switch 66 similarly to the control unit 60, the control unit 80 controls operations of the fourth switch 81 instead of the second switch 67.

For example, in a case of reading information from the radio tag T using one of the first antenna 61 and the second antenna 62, and the wiring 82, the control unit 80 causes the fourth switch 81 to disconnect the first antenna 61 and second antenna 62 from the reception unit 64. In other words, the control unit 80 causes the fourth switch 81 to transition to an OFF state. Additionally, in a case of reading information from the radio tag T using the first antenna 61 and the second antenna 62, the control unit 80 causes the fourth switch 81 to connect the first antenna 61 and the second antenna 62 to the reception unit 64. In other words, the control unit 80 causes the fourth switch 81 to transition to an ON state.

Furthermore, the control unit 80 determines whether the radio tag T that is a source of the received signal is housed in the box 5 based on the magnitude of the difference between the received signal strength of the signal received by the inside-box antenna from the radio tag T and the received signal strength of the signal received by the outside-box antenna from the radio tag T.

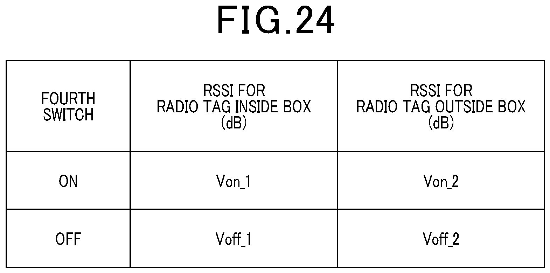

More specifically, the control unit 80 first performs the reading processing with the fourth switch 81 in the ON state to acquire a third received signal strength. Next, the control unit 80 performs the reading processing with the fourth switch 81 in an OFF state to acquire a fourth received signal strength. Then, the control unit 80 determines whether the radio tag T is housed in the box 5 based on the magnitude of the difference between the third received signal strength and the fourth received signal strength. The determination processing will be described in detail with reference to FIG. 24.

For example, first, the control unit 80 causes the fourth switch 81 to transition to the ON state and causes the transmission unit 63 to transmit a signal via the first antenna 61. In a case where as a response to the transmission, the radio tag T1 inside the box 5 transmits a signal, the control unit 80 acquires Von_1 that is the RSSI of a signal received by the reception unit 64 via the second antenna 62. Then, the control unit 80 causes the fourth switch 81 to transition to the OFF state and causes the transmission unit 63 to transmit a signal via the first antenna 61. In a case where as a response to the transmission, the radio tag T1 inside the box 5 transmits a signal, the control unit 80 acquires Voff_1 that is the RSSI of a signal received by the reception unit 64 via the wiring 82. Here, since the radio tag T1 is inside the box 5, with the fourth switch 81 in the ON state, radio waves used for the communication between the radio tag T1 and both the first antenna 61 and the second antenna 62 are unsusceptible to attenuation caused by the shielding property of the box 5. On the other hand, with the fourth switch 81 in the OFF state, radio waves used for the communication between the radio tag T1 and both the first antenna 61 and the wiring 82 pass through the box 5 and are thus affected by attenuation caused by the shielding property of the box 5. Accordingly, the difference between Von_1 and Voff_1 is greater than the difference between Von_2 and Voff_2 described below. Therefore, in a case where the difference between Von_1 and Voff_1 is greater than or equal to a threshold, the control unit 80 determines that the radio tag T is housed in the box 5.

Additionally, for example, first, the control unit 80 causes the fourth switch 81 to transition to the ON state and causes the transmission unit 63 to transmit a signal via the first antenna 61. In a case where as a response to the transmission, the radio tag T2 outside the box 5 transmits a signal, the control unit 80 acquires Von_2 that is the RSSI of a signal received by the reception unit 64 via the second antenna 62. Then, the control unit 80 causes the fourth switch 81 to transition to the OFF state and causes the transmission unit 63 to transmit a signal via the first antenna 61. In a case where as a response to the transmission, the radio tag T2 outside the box 5 transmits a signal, the control unit 80 acquires Voff_2 that is the RSSI of a signal received by the reception unit 64 via the wiring 82. Here, since the radio tag T2 is outside the box 5, with the fourth switch 81 in the ON state, radio waves used for the communication between the radio tag T2 and both the first antenna 61 and the second antenna 62 pass through the box 5 and are thus affected by attenuation caused by the shielding property of the box 5. On the other hand, with the fourth switch 81 in the OFF state, radio waves used for the communication between the radio tag T2 and both the first antenna 61 and the wiring 82 also pass through the box 5 and are thus affected by attenuation caused by the shielding property of the box 5. Accordingly, the difference between Von_2 and Voff_2 is less than the difference between Von_1 and Voff_1 described above. Therefore, in a case where the difference between Von_2 and Voff_2 is less than a threshold, the control unit 80 determines that the radio tag T is not housed in the box 5.

The fourth switch 81 switches ON and OFF the connection between the inside-box antenna and the reception unit 64. Specifically, the fourth switch 81 is controlled by the control unit 80 to switch between the connected state in which the transmission and reception separating unit 65 is connected to the reception unit 64, the connected state in which the first switch 66 is connected to the reception unit 64, and disconnected state.

The wiring 82 is formed on the control board 4 and connects the reception unit 64 and the fourth switch 81. The wiring 82 is, for example, a micro-strip line. In a case where the fourth switch 81 is in the ON state, the wiring 82 transfers a signal from the first antenna 61 or the second antenna 62. In a case where the fourth switch 81 is in the OFF state, the wiring 82 operates as an antenna receiving a signal from the radio tag T. Note that the wiring 82 is also referred to as a weak antenna because the reception performance of the wiring 82 is inferior to that of each of the first antenna 61 and the second antenna 62. For example, the receivable area of the wiring 82 is all or part of the upper surface of the information reading apparatus 1.

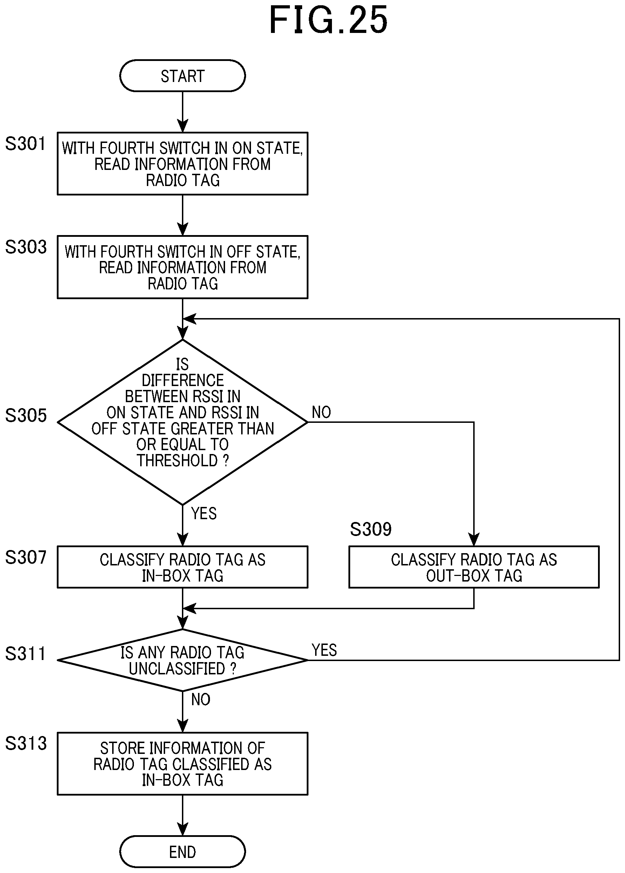

Now, with reference to FIG. 25, the processing in the second example of the present embodiment will be described.

First, the control unit 80 reads information from the radio tag T with the fourth switch 81 in the ON state (step S301). For example, the control unit 80 causes the fourth switch 81 to transition to the ON state, and reads information from the radio tag T via the first antenna 61 and the second antenna 62. The control unit 80 acquires a third RSSI of a signal received from the radio tag T of which the information has been successfully read. Additionally, the control unit 80 stores the number of radio tags T of which the information has been read.

Then, the control unit 80 reads information from the radio tag T with the fourth switch 81 in the OFF state (step S303). For example, the control unit 80 causes the fourth switch 81 to transition to the OFF state, and reads information from the radio tag T via the first antenna 61 and the wiring 82. The control unit 80 acquires a fourth RSSI of a signal received from the radio tag T of which the information has been successfully read.

The control unit 80 determines whether the difference between the RSSI with the fourth switch 81 in the ON state and the RSSI with the fourth switch 81 in the OFF state is greater than or equal to a threshold (step S305). For example, the control unit 80 determines whether the difference between the third RSSI and the fourth RSSI is greater than or equal to the threshold.

In a case where the difference between the RSSI in the ON state and the RSSI in the OFF state is greater than or equal to a threshold, the control unit 80 classifies the radio tag T as the inside-box tag T1 (step S307). For example, in a case where the difference between the third RSSI and the fourth RSSI is greater than or equal to the threshold, the control unit 80 determines that the radio tag T is inside the box 5 and classifies the radio tag T as the inside-box tag T1.

In a case where the difference between the RSSI in the ON state and the RSSI in the OFF state is less than the threshold, the control unit 80 classifies the radio tag T as the outside-box tag T2 (step S309). For example, in a case where the difference between the third RSSI and the fourth RSSI is less than the threshold, the control unit 80 determines that the radio tag T is outside the box 5 and classifies the radio tag T as the outside-box tag T2.

The control unit 80 determines whether any radio tag T is unclassified (step S311). In a case where no radio tag T is unclassified, the control unit 80 causes the storage to store the information of the radio tag T classified as the inside-box tag T1 (step S313). Note that in a case where any radio tag is unclassified, the processing returns to step S305. The processing in steps S311 to S313 is substantially the same as the processing in steps S211 to S213 in FIG. 21.

As described above, according to the second example of the fifth embodiment of the present disclosure, the at least one inside-box antenna operates as an antenna transmitting a signal to the radio tag T and as an antenna receiving a signal from the radio tag T, the at least one outside-box antenna operates as an antenna receiving a signal from the radio tag T, and the control unit 80 determines whether the radio tag T that is a source of the received signal is housed in the box 5 based on the magnitude of a difference between the received signal strength of the signal received by the at least one inside-box antenna from the radio tag T and the received signal strength of the signal received by the at least one outside-box antenna from the radio tag T.

In a case where the inside-box antenna receives a signal from the radio tag T1 inside the box 5, radio waves used for the transmission and reception between the inside-box antenna and the radio tag T1 are unsusceptible to attenuation caused by the shielding property of the box 5 because the radio waves do not pass through the box 5. On the other hand, in a case where the outside-box antenna receives a signal from the radio tag T1, radio waves used for the inside-box antenna to receive the signal from the radio tag T1pass through the box 5 and are thus affected by attenuation caused by the shielding property of the box 5.

In contrast, in a case where the inside-box antenna receives a signal from the radio tag T2 outside the box 5, radio waves used for the transmission and reception between the inside-box antenna and the radio tag T2 pass through the box 5 and are thus affected by attenuation caused by the shielding property of the box 5. Additionally, in a case where the outside-box antenna receives a signal from the radio tag T2 outside the box 5, a response wave from the radio tag T2 is affected by attenuation caused by the shielding property of the box 5 because radio waves used for the outside-box antenna to receive the signal from the radio tag T2 do not pass through the box 5 but radio waves used for the inside-box antenna to transmit the signal to the radio tag T2 pass through the box 5.

Accordingly, the difference between the received signal strength in a case where the inside-box antenna receives the signal from the radio tag T1 and the received signal strength in a case where the outside-box antenna receives the signal from the radio tag T1 is greater than the difference between the received signal strength in a case where the inside-box antenna receives the signal from the radio tag T2 and the received signal strength in a case where the outside-box antenna receives the signal from the radio tag T2. Therefore, whether the radio tag T is housed in the box 5 can be determined based on the magnitude of the difference between the received signal strength of the inside-box antenna and the received signal strength of the outside-box antenna.

Additionally, the information reading apparatus 1 includes the control board 4 including the control unit 80, the reception unit 64 receiving a signal from the at least one inside-box antenna, and the fourth switch 81 switching on and off the connection between the at least one inside-box antenna and the reception unit 64, the control board 4 is installed outside the box 5, the at least one outside-box antenna is the wiring 82 connecting the reception unit 64 and the fourth switch 81, and the control unit 80 determines whether the radio tag T that is a source of the received signal is housed in the box 5 based on the magnitude of the difference between the received signal strength of the signal received by the at least one inside-box antenna from the radio tag T in a case where the fourth switch 81 is on and the received signal strength of the signal received by the at least one outside-box antenna from the radio tag T in a case where the fourth switch 81 is off.

In this manner, by operating the wiring 82 of the control board 4 as an outside-box antenna, the outside-box antenna can be implemented without addition of an antenna. That is, with no increase in costs, the information of the radio tag T2 outside the box 5 can be restrained from leaking into the information of the radio tag T1 inside the box 5.

Additionally, the control board 4 is installed on an upper surface of the box 5 in a placed state. Here, the radio tag T2 outside the box 5 is likely to be placed on the upper surface of the information reading apparatus 1, which is substantially parallel to the upper surface of the box 5. On the other hand, the wiring 82 operating as the outside-box antenna is a weak antenna, and can thus receive no signal from the radio tag T when located away from the radio tag T. According to the configuration described above, the control board 4 is installed near a location where the radio tag T2 is likely to be placed, and thus the wiring 82 can be configured to easily receive a signal from the radio tag T2.

Note that the present disclosure is not limited to each of the embodiments and modification examples and may be embodied, for example, as follows. (1) The box 5 is not limited to the first case body 20 and second case body 40 of the sliding type as described above, and may be two cases hinged together in such a manner that the cases can be opened and closed.

(2) Housing of the articles G in the predetermined arrangement in the housing space S is not limited to the use of the partition plates 33. Other members may be employed, that are configured to align the orientation of the articles G according to the shape of the articles G or the like when the articles G are housed.

(3) The housed articles G are not limited to narrow packages encapsulating predetermined chemicals and may be card keys including built-in radio tags.

## Claims

1. An information reading apparatus comprising:
a box which suppresses outside leakage of radio waves;
a housing unit disposed in the box and housing a plurality of articles in a predetermined arrangement;
at least one reading antenna disposed in the box for reading information from a radio tag shaped like a plate and attached to each of the plurality of articles at a predetermined position; and
a control unit performing reading processing of reading information from the radio tag in the housing unit utilizing the at least one reading antenna, wherein
(a) the housing unit houses the plurality of articles in such a manner that a plate surface of the radio tag attached to each of the plurality of articles is orthogonal to an opposing direction of a pair of opposing inner surfaces among a plurality of inner surfaces of the housing unit, and
(b) a first distance between either one of the pair of inner surfaces and an inner surface of the box opposed by an outer surface of the housing unit corresponding to the either one of the pair of inner surfaces is longer than a second distance between other inner surfaces among the plurality of inner surfaces of the housing unit other than the pair of inner surfaces and inner surfaces of the box opposed by outer surfaces of the housing unit corresponding to the other inner surfaces.

2. The information reading apparatus according to claim 1, further comprising:
an antenna for external communication, the antenna being disposed inside the box and used to communicate wirelessly with external equipment outside the box, wherein
the box is provided with a hole portion with an opening width of 2/4 or more and less than λ1/4, where λ1 is a wavelength of a radio wave from the at least one reading antenna, and λ2 is a wavelength of a radio wave from the antenna for external communication.

3. The information reading apparatus according to claim 1 or 2, wherein
the at least one reading antenna comprises a plurality of reading antennas, the plurality of reading antennas respectively operates as at least one of an antenna transmitting a signal to the radio tag and an antenna receiving a signal from the radio tag,
the control unit performs the reading processing for each transmission and reception pattern that is a selection pattern for the reading antenna used for transmission and reception, and
the transmission and reception pattern includes a pattern in which the same reading antenna is used for transmission and reception, and a pattern in which different reading antennas are used for transmission and reception.

4. The information reading apparatus according to claim 1 or 2, wherein
according to a result of a comparison between a predetermined threshold corresponding to transmit power for a signal transmitted via the at least one reading antenna and a received signal strength of a signal received from a radio tag, the control unit determines whether the radio tag that is a source of the received signal is housed in the box, and
the transmit power and the predetermined threshold are set according to the number of radio tags previously determined to be housed in the box.

5. The information reading apparatus according to claim 4, wherein
the at least one reading antenna comprises a plurality of reading antennas, and
the transmit power and the predetermined threshold are set for each of the plurality of the reading antennas according to the number of radio tags previously determined to be housed in the box.

6. The information reading apparatus according to claim 1 or 2, further comprising:
at least one outside-box antenna disposed outside the box to communicate wirelessly with a radio tag, wherein
the at least one reading antenna comprises at least one inside-box antenna, and
the control unit performs reading processing of reading information from a radio tag utilizing the at least one inside-box antenna and the at least one outside-box antenna, and determines whether the radio tag that is a source of the received signal is housed in the box based on a received signal strength of a signal received by the at least one inside-box antenna from a radio tag and a received signal strength of a signal received by the at least one outside-box antenna from a radio tag.

7. The information reading apparatus according to claim 6, wherein
the control unit determines whether the radio tag that is a source of the received signal is housed in the box based on a magnitude relationship between the received signal strength of the signal received by the at least one inside-box antenna from a radio tag and the received signal strength of the signal received by the at least one outside-box antenna from a radio tag.

8. The information reading apparatus according to claim 7, further comprising:
a control board comprising:
the control unit; and
the at least one outside-box antenna, wherein
the control board is installed outside the box.

9. The information reading apparatus according to claim 6, wherein
the at least one inside-box antenna operates as an antenna transmitting a signal to a radio tag and as an antenna receiving a signal from a radio tag,
the at least one outside-box antenna operates as an antenna receiving a signal from a radio tag, and
the control unit determines whether the radio tag that is a source of the received signal is housed in the box based on a magnitude of a difference between the received signal strength of the signal received by the at least one inside-box antenna from a radio tag and the received signal strength of the signal received by the at least one outside-box antenna from a radio tag.

10. The information reading apparatus according to claim 9, further comprising:
a control board comprising:
the control unit;
a reception unit receiving a signal from the at least one inside-box antenna; and
a switch switching on and off a connection between the at least one inside-box antenna and the reception unit, wherein
the control board is installed outside the box,
the at least one outside-box antenna is wiring connecting the reception unit and the switch, and
the control unit determines whether the radio tag that is a source of the received signal is housed in the box based on the magnitude of the difference between the received signal strength of the signal received by the at least one inside-box antenna from a radio tag in a case where the switch is on and the received signal strength of the signal received by the at least one outside-box antenna from a radio tag in a case where the switch is off.

11. The information reading apparatus according to claim 10, wherein
the control board is installed on an upper surface of the box in a placed state.

12. An information reading apparatus comprising:
a box which internally houses a plurality of articles and suppresses outside leakage of radio waves;
a plurality of antennas disposed in the box to communicate wirelessly with a radio tag attached to each of the plurality of articles; and
a control unit performing reading processing of reading information from the radio tag in the box utilizing the plurality of antennas, wherein
the plurality of antennas respectively operates as at least one of an antenna transmitting a signal to the radio tag and an antenna receiving a signal from the radio tag,
the control unit performs the reading processing for each transmission and reception pattern that is a selection pattern for antennas used for transmission and reception, and
the transmission and reception pattern includes a pattern in which the same antenna is used for transmission and reception and a pattern in which different antennas are used for transmission and reception.

13. An information reading apparatus comprising:
a box which internally houses a plurality of articles and suppresses outside leakage of radio waves;
an antenna disposed in the box to communicate wirelessly with a radio tag attached to each of the plurality of articles; and
a control unit performing reading processing of reading information from a radio tag utilizing the antenna, wherein
according to a result of a comparison between a predetermined threshold corresponding to transmit power for a signal transmitted via the antenna and a received signal strength of a signal received from a radio tag, the control unit determines whether the radio tag that is a source of the received signal is housed in the box, and
the transmit power and the predetermined threshold are set according to the number of radio tags previously determined to be housed in the box.

14. An information reading apparatus comprising:
a box which internally houses a plurality of articles and suppresses outside leakage of radio waves;
at least one inside-box antenna disposed in the box to communicate wirelessly with a radio tag attached to each of the plurality of articles;
at least one outside-box antenna disposed outside the box to communicate wirelessly with a radio tag; and
a control unit performing reading processing of reading information from a radio tag utilizing the at least one inside-box antenna and the at least one outside-box antenna, wherein
the control unit determines whether the radio tag that is a source of the received signal is housed in the box based on a received signal strength of a signal received by the at least one inside-box antenna from a radio tag and a received signal strength of a signal received by the at least one outside-box antenna from a radio tag.
